# EUROPEAN PATENT APPLICATION

(11) **EP 1 598 760 A1**
(43) Date of publication of application: **23.11.2005**
(21) Application number: 04708051.0
(22) Date of filing: 04.02.2004
(51) Int. Cl.: G06F 17/60

(54) **REMOTE INTERVIEW EXAM SYSTEM**

(30) Priority: 04.02.2003 JP 2003027646
(71) Applicant: Ginganet Corporation, Osaka-shi, Osaka 556-0017 (JP)
(72) Inventor: SAHASHI, Nozomu, 5960045 (JP)
(74) Representative: Schoppe, Fritz
(86) International application number: PCT/JP2004/001121
(87) International publication number: WO 2004/070639

(57) **Abstract**

A remote interview system is provided that reduces geographical and time constraints for an applicant and allows efficient selection of an appropriate person for a recruiter. The remote interview system of the invention includes a web server, a two-way communications server, a mail server, an interview server and a communications line connecting apparatus. The remote interview system connects to an applicant terminal and a recruiter terminal via a communications line to perform a remote interview. The interview server includes a function to select an applicant using a preliminary selection including a knowledge test, a writing ability test, character diagnosis and an oral test. The remote interview system includes a personal identification function to acquire the image of an applicant during a preliminary selection test and collates the acquired image with the registered image of the applicant, thereby providing fraudulent action, such as an imposter or substitute taking an examination for an applicant. The remote interview system includes a function to distribute question video to an applicant terminal, a function to receive and record the answer video of the applicant in response to the distributed question video, and a function to distribute the recorded answer video to a recruiter terminal and perform rating and evaluation, thereby remotely executing an oral test without a recruiter being required to directly interview an applicant.

## Description

### BACKGROUND OF THE INVENTION

### FIELD OF THE INVENTION

The present invention relates to a remote interview system that remotely performs an interview using a videophone, and in particular, to a remote interview system which enables efficient selection of an appropriate person during recruitment. The term "video" used herein includes "voice" unless otherwise indicated.

### BACKGROUND ART

An interview in which a recruiter executes face-to-face with an applicant is an important selection process during recruitment, such as job offers in a company and auditions of entertainers. However, it is a heavy burden on a recruiter in terms of time and cost to individually and personally conduct interviews with a large number of applicants, such as securing a location and personnel for the interviews. An applicant must visit a location of interview at a specified time. This results in significant geographical and time constraints.

In recent years, with the development of communications technology, practically satisfactory conversation via video and voice has been made available via videophone between terminals at remote locations. Remote interviews using videophones between an applicant and a recruiter is getting more popular.

However, even with such a videophone-based interview, a recruiter must individually interview a large number of applicants, which places a heavy burden on the recruiter.

In order to solve this problem, JP-A-2002-73914 discloses a method for executing an online screening test in advance to diagnose the knowledge level of an applicant and for performing an online interview only with people who have obtained a predetermined pass reference score. In this way, the burden on a recruiter is reduced by selecting in advance a candidate interviewee using by way of an online screening test.

JP-A-2002-73914 describes a virtual interview in which an applicant answers a selection type interview question online and a chat interview to perform an interview in real time via text messaging between an applicant and a recruiter in addition to a video interview in which an online interview is conducted in real time using video and voice. With the virtual interview, an applicant can conduct an interview at any time that it is convenient to him/her. With the chat interview, it is possible to select a capable person from among the applicants who are not proficient at face-to-face interviews.

In such a related art interview system, in order to reduce the burden on a recruiter, a question registered as a preliminary selection is displayed on the screen and answers input by the applicants from a keyboard are compiled by a computer. This could allow a person other than the applicant to answer the question or the applicant to answer the question with the help of advice from a third party. This presents a problem in that an applicant who has passed the preliminary selection is not always an appropriate person.

In a virtual or chat interview, a person other than the applicant could answer a question or the applicant could rely on advice from a third party in answering the question. Thus, the problem remains that an applicant who has passed the virtual or chat selection is not always an appropriate person.

During selection of a person, a response of an applicant to a question of a recruiter or an expression of the applicant is a critical factor in evaluating the applicant. Thus, when pre-selection is made only based on the score of a selection answer type online screening test or selection answer type virtual interview, a capable person is often overlooked and it is often impossible to select an appropriate person.

Thus, the invention has as an object to provide a remote interview system capable of efficiently selecting an appropriate person for a recruiter with small geographical and time constraints for the applicant.

### SUMMARY OF THE INVENTION

A first aspect of the invention provides a remote interview system that performs a remote interview by connecting one or more applicant terminals having a videophone function and one or more recruiter terminals having a videophone function via a communications line. The remote interview system includes a recruitment accepting means for accepting recruitment from the recruiter terminal, an application accepting means for accepting an application from the applicant terminal in response to the accepted recruitment, a question presenting means for presenting a pre-registered question to the applicant terminal whose application has been accepted, an answer acquiring means for acquiring an answer input by an applicant in response to the presented question, and a rating means for rating the acquired answer, to thereby provide the system for executing a preliminary selection test on an applicant.

The remote interview system further includes an applicant image registering means for registering an image of an applicant, an applicant image acquiring means for acquiring the image of an applicant during the preliminary selection test, and an image collating means for collating the acquired image with the registered image, to thereby provide the system with a function to check that the applicant himself/herself is taking the preliminary selection test.

The invention includes a recruitment accepting means, an application accepting means, a question presenting means, an answer acquiring means and a rating means and executes a preliminary selection test via a communications line. This reduces the geographical and time constraints for an applicant and allows a recruiter to screen candidate applicants for a remote interview, which reduces the load on the recruiter. The invention also includes an applicant image registering means, an applicant image acquiring means and an image collating means in order to check that the applicant himself/herself is taking the preliminary selection test. This prevents fraudulent action such as taking an examination as a substitute for an applicant, and thereby enables efficient selection of an appropriate person.

Acquisition of the image of an applicant during a preliminary selection test is preferably made randomly although it may be made in predetermined intervals. Randomly acquiring an image provides an incentive to prevent fraudulent action such as the applicant being advised by a third party.

Collating of images may be automatically done to identify the applicant by way of image processing such as pattern matching. Or, an acquired image may be stored and a registered image and the acquired image may be compared by the recruiter at the time of rating.

A second aspect of the present invention provides the remote interview system according to the first aspect, wherein the image collating means includes a function to perform matching between the acquired image and the registered image and to record an acquired image in case matching is not obtained, and wherein the rating means includes a function to display in a contrasting manner, the registered image and the recorded image.

The image collating means of the present invention collates a registered image with an acquired image and records the acquired image in case matching is not obtained. The registered image and the recorded image are displayed in contrast for a recruiter to make judgment at the time of rating. This detects fraudulent action such as taking an examination as a substitute for an applicant without causing a significant burden on the recruiter, even where the image processing is not sufficiently reliable.

A third aspect of the present invention provides the remote interview system according to the first or second aspect, wherein the applicant image registering means and/or the applicant image acquiring means includes a communications function that is compliant with a videophone protocol and segments a still image from received television video.

With this configuration, a recruiter or an applicant can access the remote interview system without installing a special program to perform the preliminary selection test including a personal identification function, as long as he/she has a terminal including a videophone function.

A fourth aspect of the present invention provides the remote interview system according to any one of the first through third aspects, wherein the remote interview system includes a function to check the knowledge level of an applicant as the preliminary selection test.

With this configuration, it is possible to previously check and present to a recruiter the knowledge level of an applicant, and accordingly, to screen a candidate applicant for a remote interview, thereby selecting an appropriate person more efficiently.

The recruitment accepting means may include a function to specify the selection conditions of the knowledge test and the rating means may include a function to automatically select a candidate applicant for a remote interview in accordance with the rating result of the knowledge test. This effectively selects a person having a predetermined knowledge level without causing a load on the recruiter.

A fifth aspect of the present invention provides the remote interview system according to any one of the first through fourth aspects, wherein the remote interview system includes a function to execute a character diagnosis test for diagnosing the character of an applicant as the preliminary selection test.

With this configuration, it is possible to previously analyze and present to a recruiter the character of an applicant, and accordingly, to screen a candidate applicant for a remote interview, thereby selecting an appropriate person more efficiently.

The recruitment accepting means may include a function to specify the selection conditions of the character diagnosis test and the rating means may include a function to automatically select a candidate applicant for a remote interview in accordance with the rating result of the character diagnosis test. This effectively selects a person having a predetermined character without causing a load on the recruiter.

A sixth aspect of the present invention provides the remote interview system according to any one of the first through fifth aspects, wherein the remote interview system includes a function to execute a writing ability test for checking the writing ability of an applicant as the preliminary selection test.

With this configuration, it is possible to previously evaluate and present to a recruiter the writing ability of an applicant, and accordingly, to screen a candidate applicant for a remote interview, thereby selecting an appropriate person more efficiently.

The recruitment accepting means may include a function to specify the selection conditions of the writing ability test and the rating means may include a function to automatically select a candidate applicant for a remote interview in accordance with the rating result of the writing ability test. This effectively selects a person having a predetermined writing ability without causing a load on the recruiter.

A seventh aspect of the present invention provides the remote interview system according to any one of the first through sixth aspects, wherein the recruitment accepting means includes a question setting means for setting a question to be presented by the question presenting means.

With this configuration, a recruiter can customize the details of the preliminary selection test in accordance with the purpose of the recruitment, thereby selecting an appropriate person more efficiently.

Setting of a question may include setting of test conditions such as a time limit and setting of answer evaluating conditions in addition to a registration of the question.

An eighth aspect of the present invention provides the remote interview system according to the seventh aspect, wherein the question setting means includes a function to specify a question as either an obligatory question or an elective question and a function to specify the number of questions to be presented, and wherein the question presenting means includes a function to present the specified number of questions by using all of the questions specified as obligatory questions and questions randomly selected from those specified as elective questions.

With this configuration, important questions specified as obligatory questions are presented for all applicants, while the other questions are specified as elective questions such that different questions are presented for each applicant. This secures uniform evaluation of applicants and impartial evaluation to some extent even where an applicant has acquired question information from another who has already taken the examination.

A ninth aspect of the present invention provides the remote interview system according to the seventh aspect, wherein the question setting means includes a function to specify the time required to answer each question and a function to specify the time limit of the preliminary selection test, and wherein the question presenting means includes a function to make a combination of questions that can be answered within the specified time limit.

With this configuration, a combination of questions that can be answered within the specified time limit is automatically made. An applicant has time to comprehend the content of each question and answer it. This allows appropriate evaluation of applicants.

A tenth aspect of the present invention provides the remote interview system according to any one of the seventh through ninth aspects, wherein the question setting means includes a function to specify the field of each question, and wherein the question presenting means includes a function to present a combination of questions in a field corresponding to a specified course.

With this configuration, a combination of questions in a field corresponding to a specified course is automatically made. A recruiter can perform selection satisfying the purpose of recruitment more efficiently. The fields may include, for example, liberal arts, arts basics, arts specialties, science basics, science specialties, foreign languages, and current topics. The courses include a general course, a paperwork course, a technical course and a comprehensive course. For example, the general course may use a method of combining questions in the fields of liberal arts, arts basics, science basics, foreign languages, and current topics.

An eleventh aspect of the present invention provides the remote interview system according to any one of the seventh through tenth aspects, wherein the question setting means includes a function to specify the field of each question, and wherein the rating means includes a function to collate the acquired answer with a true answer and compile answers by the specified evaluation segment.

With this configuration, automatic rating is made in a selection test such as a knowledge test where rating is possible by collating an acquired answer with a true answer. This selects an appropriate person more efficiently without causing a load on a recruiter. Field-based scores are compiled from the answers of an applicant, which evaluates the ability of the applicant more appropriately.

A twelfth aspect of the present invention provides the remote interview system according to any one of the seventh through eleventh aspects, wherein the question setting means includes a function to specify the evaluation segment of each question, and wherein the rating means includes a function to compile answers by the specified evaluation segment.

With this configuration, evaluation by evaluation segment is automatically compiled from the answers of an applicant in a selection test, such as a character diagnosis test in which questions corresponding to evaluation segments are made. This selects an appropriate person more efficiently without causing a burden on a recruiter.

A thirteenth aspect of the present invention provides the remote interview system according to any one of the seventh through twelfth aspects, wherein the question setting means includes a function to specify the distribution of points of each question by evaluation segment, and wherein the rating means includes a function to present an acquired answer, a function to acquire the evaluation by evaluation segment of the presented answer and a function to compile the evaluation by evaluation segment from the acquired evaluation and the specified distribution of points.

With this configuration, in a selection test, such as a writing ability test, where a selector must make an evaluation based on an answer from an applicant, the selector may appropriately evaluate an applicant while simply inputting the evaluation of each answer without assuming the intention of each question, by previously specifying evaluation items and specifying distribution of points of each question by evaluation item.

The evaluation items may include, for example, a phrase, a descriptive power, a logical mind, reading comprehension, and a persuasive power.

A fourteenth aspect of the present invention provides the remote interview system according to the thirteenth aspect, wherein the rating means sequentially retrieves and presents acquired answers and acquires evaluation, and includes a function to sequentially retrieve and present the answers to the questions from the same applicant and a function to sequentially retrieve and present the answers to the same question from applicants.

With this configuration, it is possible to rate answers of applicants while considering variations of evaluation between questions for the same applicant and variations of evaluation between applicants for the same question, thus impartially evaluating the applicants.

A fifteenth aspect of the present invention provides the remote interview system according to any one of the eleventh through fourteenth aspects, wherein the rating means includes a function to display the results of the compilation in a bar chart.

By displaying the result of the compilation in a bar chart, it is possible to intuitively evaluate the characteristics of an applicant, thus selecting an appropriate person more efficiently. In particular, by listing the result of the selection test taken by the applicants in a bar chart, it is possible to select an appropriate person more efficiently.

A sixteenth aspect of the present invention provides the remote interview system according to any one of the first through fifteenth aspects, wherein the question presenting means includes a question video distributing means for distributing a registered question video to the applicant terminal whose application has been accepted, wherein the answer acquiring means includes an answer video recording means for receiving and recording an answer video transmitted from the applicant terminal in response to the distributed question video, and wherein the rating means includes evaluating means for distributing the recorded answer video in response to a request by the recruiter terminal and acquiring the evaluation by the recruiter, thereby providing the system with a function to execute a preliminary oral selection test on an applicant.

With this configuration, an applicant can receive a registered question video when it is convenient to him/her in order to take a preliminary oral selection test. A recruiter can receive a recorded answer video when it is convenient to him/her in order to rate the answer. The recruiter can check via video the response of an applicant in the preliminary selection test, thereby selecting an appropriate person more efficiently.

A seventeenth aspect of the present invention provides a remote interview system that performs a remote interview by connecting one or more applicant terminals having a videophone function and one or more recruiter terminals having a videophone function via a communications line. The remote interview system includes a recruitment accepting means for accepting recruitment from the recruiter terminal, an application accepting means for accepting an application from the applicant terminal in response to the accepted recruitment, a question video distributing means for distributing a registered question video to the applicant terminal whose application has been accepted, an answer video recording means for receiving and recording an answer video transmitted from the applicant terminal in response to the distributed question video, and a rating means for distributing the recorded answer video in response to a request by the recruiter terminal and acquiring the evaluation by the recruiter, to thereby provide the system with a function to execute a preliminary oral selection test on an applicant.

With this configuration, an applicant can receive a registered question video when it is convenient to him/her in order to take a preliminary oral selection test. This greatly reduces the geographical and time constraints on an applicant. A recruiter can receive a recorded answer video when it is convenient to him/her in order to execute a preliminary selection test to the applicant, which greatly reduces the load on the recruiter. Further, the recruiter can check the video of the applicant so as to prevent fraudulent action, such as taking an examination as a substitute for an applicant, thereby efficiently selecting an appropriate person.

An eighteenth aspect of the invention provides the remote interview system according to the seventeenth aspect, wherein the question video distributing means, the answer video recording means and the answer video distributing means each includes a communications function which comply with a video phone protocol.

With this configuration, a recruiter or an applicant can access the remote interview system without installing a special program to execute/take a preliminary oral selection test, as long as he/she has a terminal having a videophone function.

A nineteenth aspect of the present invention provides the remote interview system according to the seventeenth or eighteenth aspect, wherein the recruitment accepting means includes a question video setting means for setting a question video presented by the question presenting means.

With this configuration, a recruiter can customize the details of the preliminary oral selection test in accordance with the purpose of the recruitment, to thereby efficiently select an appropriate person.

Setting of a question video may include registration of a question video as well as setting of test conditions, such as a time limit and setting of evaluating conditions of answer video.

A twentieth aspect of the present invention provides the remote interview system according to any one of the seventeenth through nineteenth aspects, wherein the question video setting means includes a function to specify the distribution of points of each question by evaluation segment, and wherein the rating means includes a function to present an acquired answer video, a function to acquire the evaluation by evaluation segment of the presented answer video and a function to compile the evaluation by evaluation segment from the acquired evaluation and the specified distribution of points.

Although a recruiter must make evaluations based on the answer video of an applicant in an oral test, the selector may appropriately evaluate an applicant while simply inputting the evaluation of each answer video without assuming the intention of each question, by previously specifying evaluation items and specifying the distribution of points of each question by evaluation item.

The evaluation items may include, for example, a manner, enthusiasm, a listening ability, a sense, and a descriptive power.

A twenty-first aspect of the invention provides the remote interview system according to the twentieth aspect, wherein the rating means sequentially takes out and presents acquired answer video and acquires evaluation, and wherein the rating means includes a function to sequentially retrieve and present the answer video corresponding to the questions from the same applicant and a function to sequentially retrieve and present the answer video corresponding to the same question from applicants.

With this configuration, it is possible to rate answers of applicants while considering variations of evaluation between questions for the same applicant and variations of evaluation between applicants for the same question, to thus impartially evaluate the applicants.

A twenty-second aspect of the invention provides the remote interview system according to the twentieth or twenty-first aspect, wherein the rating means includes a function to display the results of the compilation in a bar chart.

By displaying the results of the compilation by evaluation items in a bar chart, it is possible to intuitively grasp the characteristics of an applicant thus selecting an appropriate person more efficiently. In particular, by listing the results of the selection test taken by the applicants in a bar chart, it is possible to select an appropriate person more efficiently.

A twenty-third aspect of the invention provides the remote interview system according to any one of the seventeenth through twenty-second aspects, wherein the answer video acquiring means includes a function to measure the response time until an applicant starts answering the distributed question and the answer time during which the applicant answers the question, and wherein the rating means includes a function to present the measured response time and answer time.

This configuration presents the response time and answer time of an applicant to a selector, such that the selector can quantitatively evaluate the response of the applicant and evaluate the enthusiasm and descriptive power of the applicant more appropriately.

A twenty-fourth aspect of the present invention provides the remote interview system according to any one of the seventeenth through twenty-third aspects, wherein the question video distributing means includes a function to re-distribute the distributed question video in response to a question check request from an applicant, and wherein the rating means includes a function to present the question check count of the applicant.

This configuration presents the question check count of the applicant to a selector, such that the selector can quantitatively evaluate the reaction of the applicant and evaluate the listening ability and attentiveness of the applicant more appropriately.

A twenty-fifth aspect of the invention provides a remote interview system including a recruitment accepting means for accepting recruitment from a recruiter terminal connected via a communications line, an application accepting means for accepting an application from an applicant terminal connected via a communications line in response to the accepted recruitment, a question video distributing means for distributing a registered question video to the applicant terminal whose application has been accepted, an answer video recording means for receiving and recording an answer video transmitted from the applicant terminal in response to the distributed question video, and a rating means for distributing the recorded answer video in response to a request by the recruiter terminal and acquiring the evaluation by the recruiter, to thereby provide the system with a function to remotely execute a preliminary oral selection test on an applicant.

With this configuration, an applicant can receive a registered question video when it is convenient to him/her in order to remotely take a preliminary oral selection test. This greatly reduces the geographical and time constraints on the applicant. A recruiter can receive a recorded answer video when it is convenient to him/her in order to execute a preliminary selection test on the applicant, which greatly reduces the burden on the recruiter. Further, the recruiter can check the video of the applicant so as to prevent fraudulent action, such as an imposter or substitute taking an examination for an applicant, to thereby efficiently select an appropriate person.

A twenty-sixth aspect of the invention provides a remote interview method that performs a remote interview by connecting one or more applicant terminals having a videophone function and one or more recruiter terminals having a videophone function via a communications line. The remote interview method includes a step of accepting recruitment from the recruiter terminal, a step of accepting an application from the applicant terminal in response to the accepted recruitment, a step of presenting a pre-registered question to the applicant terminal whose application has been accepted, a step of acquiring an answer that is input by an applicant in response to the presented question, and a step of rating the acquired answer, thereby the method can execute a preliminary selection test on an applicant. The remote interview method further includes a step of registering an image of an applicant, a step of acquiring the image of an applicant during the preliminary selection test, and a step of collating the acquired image with the registered image, thereby the method can check that the applicant himself/herself is taking the preliminary selection test.

The invention includes a recruitment accepting step, an application accepting step, a question presenting step, an answer acquiring step and a rating step and executes a preliminary selection test via a communications line. This greatly reduces the geographical and time constraints for an applicant and enables a recruiter to screen candidate applicants for a remote interview, to thus greatly reduce the burden on the recruiter. The invention also includes an applicant image registering step, an applicant image acquiring step and an image collating step in order to check that the applicant himself /herself is taking the preliminary selection test. This prevents fraudulent action, such as an imposter or substitute taking an examination for an applicant, thereby efficiently selecting an appropriate person.

Acquisition of the image of an applicant during a preliminary selection test is preferably made randomly, although it may be made in predetermined intervals. Randomly acquiring an image provides an incentive to prevent fraudulent action, such as the applicant being advised by a third party.

Collating of images may be automatically performed to identify the applicant using image processing, such as pattern matching. Or, an acquired image may be stored and a registered image and the acquired image may be compared by the recruiter at the time of rating.

A remote interview method that substitutes for a step each means of the remote interview system according to any one of the second through fifteenth aspects has the same operation/working effect as that described in each aspect.

A twenty-seventh aspect of the invention provides the remote interview method according to the twenty-sixth aspect, wherein the question presenting step includes a step of distributing a registered question video to the applicant terminal whose application has been accepted, wherein the answer acquiring step includes a step of receiving and recording an answer video transmitted from the applicant terminal in response to the distributed question video, wherein the rating step includes a step of distributing the recorded answer video in response to a request by the recruiter terminal and acquiring the evaluation by the recruiter, thereby the method can execute a preliminary oral selection test on an applicant.

With this configuration, an applicant can receive a registered question video when it is convenient to him/her in order to take a preliminary oral selection test. This greatly reduces the geographical and time constraints on an applicant. A recruiter can receive a recorded answer video when it is convenient to him/her in order to execute a preliminary selection test to the applicant, which greatly reduces the load on the recruiter. Further, the recruiter can check via video the response of the applicant, such that it is possible to efficiently select an appropriate person.

A twenty-eighth aspect of the invention provides a remote interview method that performs a remote interview by connecting one or more applicant terminals having a videophone function and one or more recruiter terminals having a videophone function via a communications line. The remote interview method includes a step of accepting recruitment from the recruiter terminal, a step of accepting an application from the applicant terminal in response to the accepted recruitment, a step of distributing a registered question video to the applicant terminal whose application has been accepted, a step of receiving and recording an answer video transmitted from the applicant terminal in response to the distributed question video, and a step of distributing the recorded answer video in response to a request by the recruiter terminal and acquiring the evaluation by the recruiter, thereby the method can execute a preliminary oral selection test on an applicant.

With this configuration, an applicant can receive a registered question video when it is convenient to him/her in order to take a preliminary oral selection test. This greatly reduces the geographical and time constraints on an applicant. A recruiter can receive a recorded answer video when it is convenient to him/her in order to execute a preliminary selection test on the applicant, which greatly reduces the burden on the recruiter. Further, the recruiter can check the video of the applicant so as to prevent fraudulent action, such as an imposter or substitute taking an examination for an applicant, thereby efficiently selecting an appropriate person.

A remote interview method that substitutes for a step each means of the remote interview system according to any one of the eighteenth through twenty-fourth aspects has the same operation/working effect as that described in each aspect.

A twenty-ninth aspect of the invention provides a remote interview method including a step of accepting recruitment from a recruiter terminal connected via a communications line, a step of accepting an application from an applicant terminal connected via a communications line in response to the accepted recruitment, a step of distributing a registered question video to the applicant terminal whose application has been accepted, a step of receiving and recording an answer video transmitted from the applicant terminal in response to the distributed question video, and a step of distributing the recorded answer video in response to a request by the recruiter terminal and acquiring the evaluation by the recruiter, thereby the method can remotely execute a preliminary oral selection test on an applicant.

With this configuration, an applicant can receive a registered question video when it is convenient to him/her in order to take a preliminary oral selection test. This greatly reduces the geographical and time constraints on an applicant. A recruiter can receive a recorded answer video when it is convenient to him/her in order to remotely select the applicant, which greatly reduces the load on the recruiter. Furthermore, the recruiter can check the video of the applicant so as to prevent fraudulent action, such as taking an examination as a substitute for an applicant, thereby efficiently selecting an appropriate person.

A thirtieth aspect of the present invention provides a remote interview program for causing a computer to execute the remote interview method according to any one of the twenty-sixth through twenty-ninth aspects.

A program that substitutes for each means or each step of the remote interview method according to any one of the twenty-sixth through twenty-ninth aspects is executed on a computer, thereby efficiently selecting an appropriate person.

These objects, other objects, features and advantages of the present invention will be more apparent from the following detailed description that refers to drawings.

### BRIEF DESCRIPTION OF THE DRAWINGS

Fig. 1 is a system block diagram of a remote interview system according to an embodiment of the present invention;
Fig. 2 is a processing flowchart (1/3) of the processing on the recruiter side in the remote interview system according to an embodiment of the present invention;
Fig. 3 is a processing flowchart (2/3) of the processing on the recruiter side in the remote interview system according to an embodiment of the present invention;
Fig. 4 is a processing flowchart (3/3) of the processing on the recruiter side in the remote interview system according to an embodiment of the present invention;
Fig. 5 is a processing flowchart (1/2) of the processing on the applicant side in the remote interview system according to an embodiment of the present invention;
Fig. 6 is a processing flowchart (2/2) of the processing on the applicant side in the remote interview system according to an embodiment of the present invention;
Fig. 7 is a processing flowchart showing an example of a knowledge test execution procedure;
Fig. 8 is a processing flowchart showing an example of a writing ability test execution procedure;
Fig. 9 is a processing flowchart showing an example of a character diagnosis test execution procedure;
Fig. 10 is a processing flowchart showing an example of a time limit procedure;
Fig. 11 is a processing flowchart showing an example of a personal identification procedure;
Fig. 12 is a processing flowchart showing an example of an oral test execution procedure;
Fig. 13 shows an example of a recruiter accepting screen;
Fig. 14 shows an example of a recruitment accepting screen;
Fig. 15 shows an example of a recruitment execution menu screen;
Fig. 16 shows an example of a recruitment outline registration/editing screen;
Fig. 17 shows an example of a knowledge test setting screen;
Fig. 18 shows an example of a writing ability test setting screen;
Fig. 19 shows an example of a character diagnosis test setting screen;
Fig. 20 shows an example of an oral test setting screen;
Fig. 21 shows a screen example assumed when video is recorded at setting of the oral test;
Fig. 22 shows a screen example assumed when video is played at setting of the oral test;
Fig. 23 shows an example of a remote interview setting screen;
Fig. 24 shows an example of an application status check screen;
Fig. 25 shows an example of an applicant details display screen;
Fig. 26 shows an example of a writing ability test rating screen;
Fig. 27 shows an example of an oral test rating screen;
Fig. 28 shows an example of a selection screen;
Fig. 29 shows an example of a knowledge test compilation screen;
Fig. 30 shows an example of a writing ability test compilation screen;
Fig. 31 shows an example of a character diagnosis compilation screen;
Fig. 32 shows an example of an oral test compilation screen;
Fig. 33 shows an example of a remote interview compilation screen;
Fig. 34 shows an example of a remote interview execution screen (recruiter side);
Fig. 35 shows an example of a recruitment display screen;
Fig. 36 shows an example of a recruitment details display screen;
Fig. 37 shows an example of an applicant accepting screen;
Fig. 38 shows an example of an applicant login screen;
Fig. 39 shows an example of an applicant execution menu screen;
Fig. 40 shows an example of a knowledge test execution screen;
Fig. 41 shows an example of a writing ability test execution screen;
Fig. 42 shows an example of a character diagnosis execution screen;
Fig. 43 shows an example of an oral test execution screen;
Fig. 44 shows an example of a remote interview execution screen (applicant side); and
Fig. 45 shows an example of a personal identification screen.

### DESCRIPTION OF THE PREFERRED EMBODIMENTS

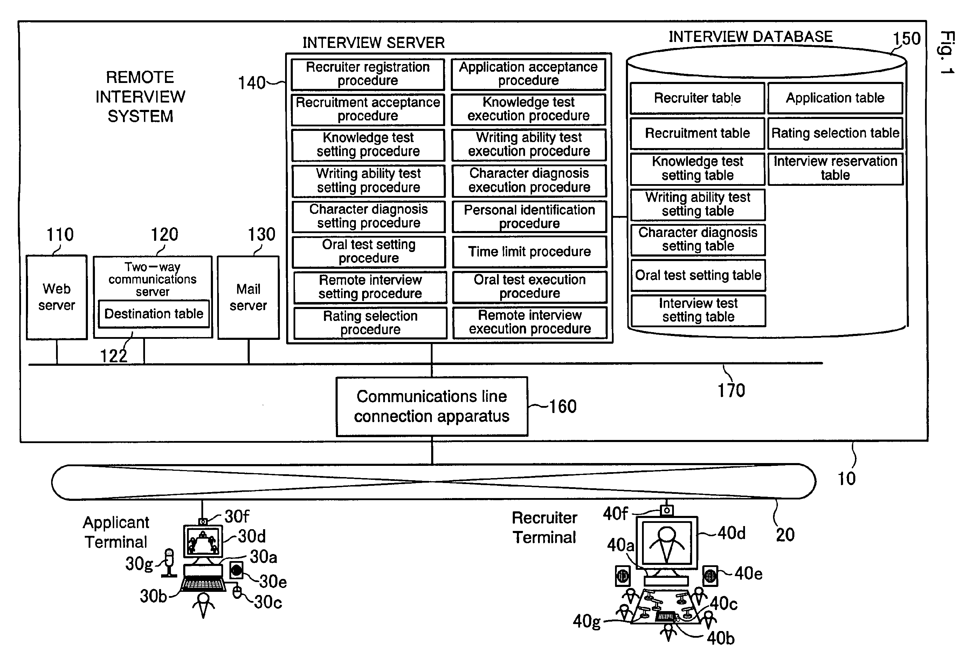

Fig. 1 is a system block diagram of a remote interview system according to an embodiment of the present invention. In Fig. 1, a numeral 10 represents a remote interview system. A web server 110, a two-way communications server 120, a mail server 130, an interview server 140 and communications line connecting apparatus 160 are interconnected via a network 170. When a remote interview service is provided, these components are connected to a recruiter terminal 40 used by a recruiter who makes a job offer recruitment and an applicant terminal 30 used by an applicant who applies to the recruitment via communications line 20.

The web server 110 is a WWW server working as a contact for using the system. An applicant or a recruiter uses a web browser on the applicant terminal 30 or recruiter terminal 40 to access a predetermined web page in order to perform a remote interview procedure.

The two-way communications server 120 includes a destination table 122 for setting the terminal address of a terminal to be connected and connects terminals set in the destination table 122 to provide two-way communications function by way of video and voice. During a remote interview, the destination table includes the terminal address of the recruiter terminal 40 used by a recruiter and the terminal address of the applicant terminal 30 used by an applicant set therein, thus enabling videophone-based interview between the recruiter terminal 40 and the applicant terminal 30. Thus, the two-way communications server 120 offers a communications function compliant with a videophone protocol used by the applicant terminal 30 or recruiter terminal 40 to be connected.

The mail server 130 is used to notify an applicant of the result of selection or notify a recruiter and an applicant when it is time to start a remote interview.

The interview server 140 is a server that operates/manages a remote interview and includes an interview database 150 that stores various tables used to execute an offered interview service. The interview server 140 performs a recruiter registration procedure for registering a recruiter, a recruitment acceptance procedure for accepting the recruitment by the registered recruiter, a knowledge test setting procedure for setting the details of a knowledge test executed at the time of recruitment, a writing ability test setting procedure for setting the details of a writing ability test executed at the time of recruitment, a character diagnosis setting procedure for setting the details of a character diagnosis test executed at the time of recruitment, an oral test setting procedure for setting the details of an oral test executed at the time of recruitment, a remote interview setting procedure for making reservation for a remote interview performed at the time of recruitment, a rating/selection procedure for rating the results of a writing ability test or an oral test that requires judgment of an interviewer among the executed tests or making selection based on the rating result of each test, an application acceptance procedure for accepting an application to a registered recruitment, a knowledge test execution procedure for executing a knowledge test set on an applicant, a writing ability test execution procedure for executing a writing ability test set on an applicant, a character diagnosis execution procedure for executing a character diagnosis test set on an applicant, a personal identification procedure for making personal identification when an applicant takes a knowledge test, a writing ability test, or a character diagnosis test, time limit procedure for managing the test time, an oral test execution procedure for executing an oral test set on an applicant, and a remote interview execution procedure for executing a remote interview between a recruiter and an applicant.

While the communications line 20 may be any type of communication line including a wired computer network, a wireless computer network, a telephone line, a satellite link, and the Internet, this example uses the Internet. Thus, the communication line connecting apparatus 160 is an Internet router for connecting to the Internet.

The applicant terminal 30 includes a computer 30a equipped with a video input interface, an audio input/output interface and network connecting apparatus, a keyboard 30b and a mouse 30c for an applicant to input a command or a message, a monitor screen 30d for displaying an image, a loudspeaker 30e for outputting voice, a television camera 30f for acquiring the video of an applicant, and a microphone 30g for acquiring the voice of an applicant. A videophone program for acquiring the video and voice of an applicant and transmitting the acquired video and voice to the two-way communications server 120 as well as outputting the video and voice transmitted from the two-way communications server 120 on the monitor screen and the loudspeaker, and a web browser for accessing the web server 110 are installed in the computer 30a.

In this example, the recruiter terminal 40 is a terminal located in a conference room in which interviewers get together. Similar to the applicant terminal 30, the recruiter terminal 40 includes a computer 40a equipped with a video input interface, an audio input/output interface and network connecting apparatus, a keyboard 40b and a mouse 40c for an interviewer to input a command or a message, a monitor screen 40d for displaying an image, a loudspeaker 40e for outputting voice, a television camera 40f for acquiring the video of a recruiter, and a microphone 40g for acquiring the voice of a recruiter. A videophone program for acquiring the video and voice of a recruiter and transmitting the acquired video and voice to the two-way communications server 120 as well as outputting the video and voice transmitted from the two-way communications server 120 on the monitor screen and the loudspeaker, and a web browser for accessing the web server 110 are installed in the computer 40a.

In this example, the video phone program installed in the applicant terminal 30 or in the recruiter terminal 40 uses the Internet as a communications line. Thus, for example, it is possible to use a videophone program compatible with an IP-type videophone protocol conforming to the ITU-T recommendation H. 323. When an ISDN public line is used as a communications line, it is possible to use a videophone program compatible with an ISDN videophone protocol conforming to the ITU-T recommendation H. 320. Other types of videophone protocols may be used as long as it is capable of performing two-way communications of video and voice via a communications line.

While a computer equipped with a video input interface, an audio input/output interface and network connecting apparatus that includes a videophone program and a web browser installed therein is used as the applicant terminal 30 or recruiter terminal 40 in the above embodiment, the present invention is not limited thereto, and any type of terminal may be used as long as it includes a videophone function and a web browser function.

In the above embodiment, four interviewers and one record keeper get together in a meeting room having a videophone terminal in order to remotely interview an applicant, with a recruiter terminal and an applicant terminal communicating in a one-on-one relationship. Thus, communications are not necessarily made via a two-way communications server, but instead, the recruiter terminal and the applicant terminal may be directly interconnected over a videophone. In such a case, a two-way communications server may be omitted and a web server may provide a function of relaying an IP address to each terminal to be connected.

The above embodiment includes a two-way communications server 120, thus enabling a multipoint connection to connect more than two videophone terminals. A plurality of interviewers may individually use recruiter terminals to connect to the two-way communications server 120 in order to perform a remote interview. It is possible to connect a plurality of applicant terminals to a single remote interview to perform a group interview or a discussion-based interview. In such a case, the video of each recruiter terminal and the video of applicant terminal can be synthesized and the resulting video distributed to each terminal. Or, the video of each terminal can be transmitted to the other terminals so as to arrange the video pictures on the home terminal.

A procedure to execute a remote interview using the remote interview system 10 is described below.

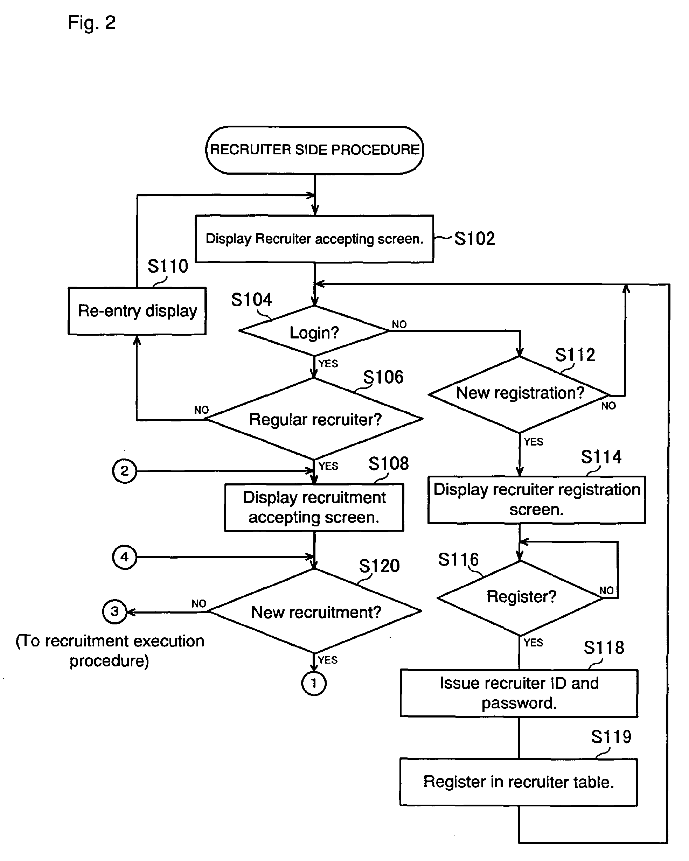

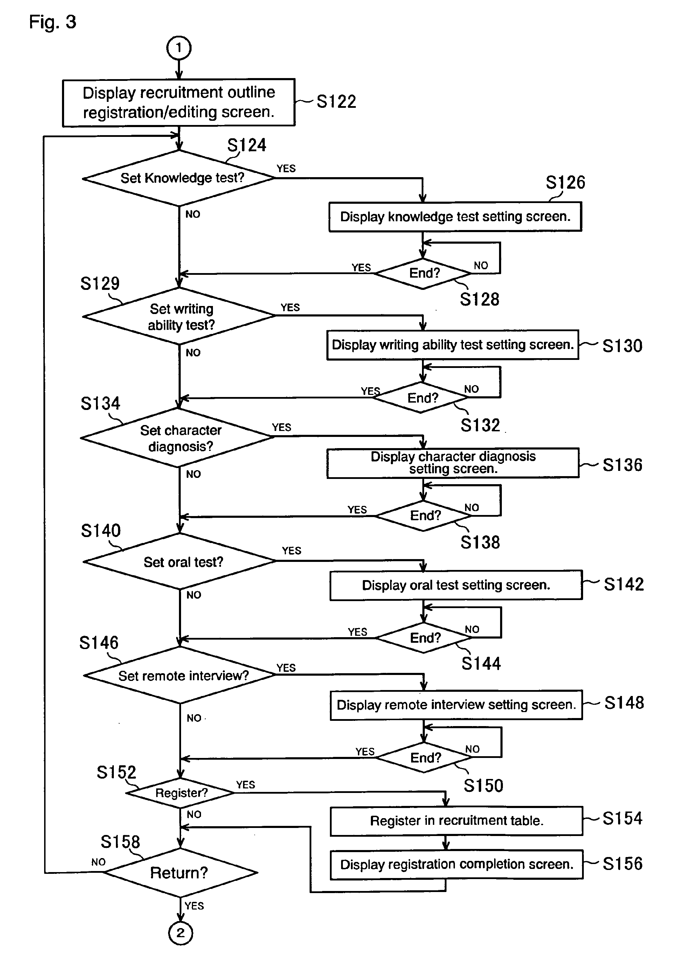

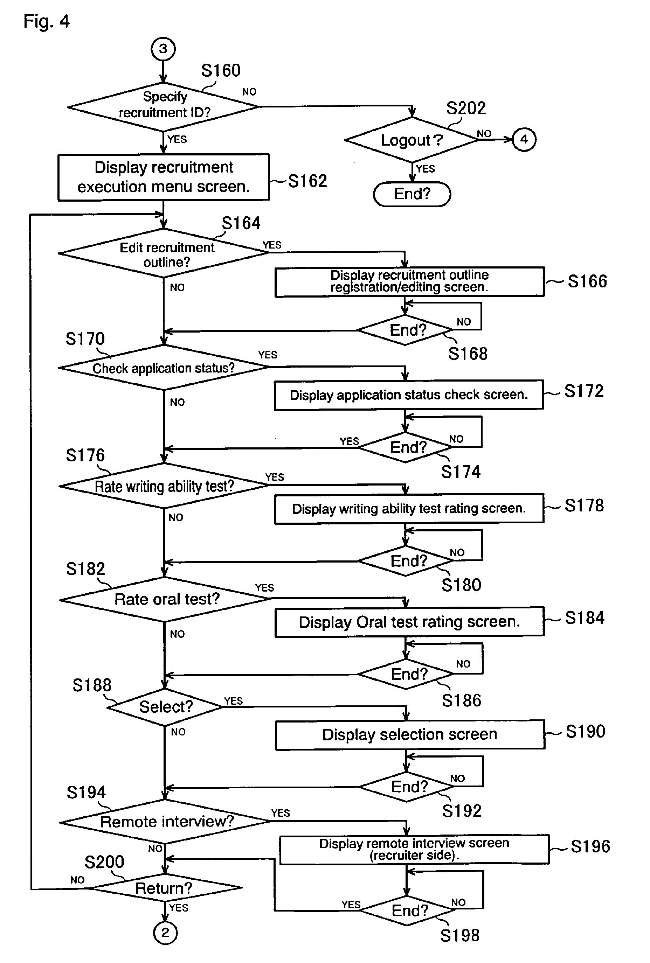

Figs. 2 through 4 show the procedure of recruiter-side processing.

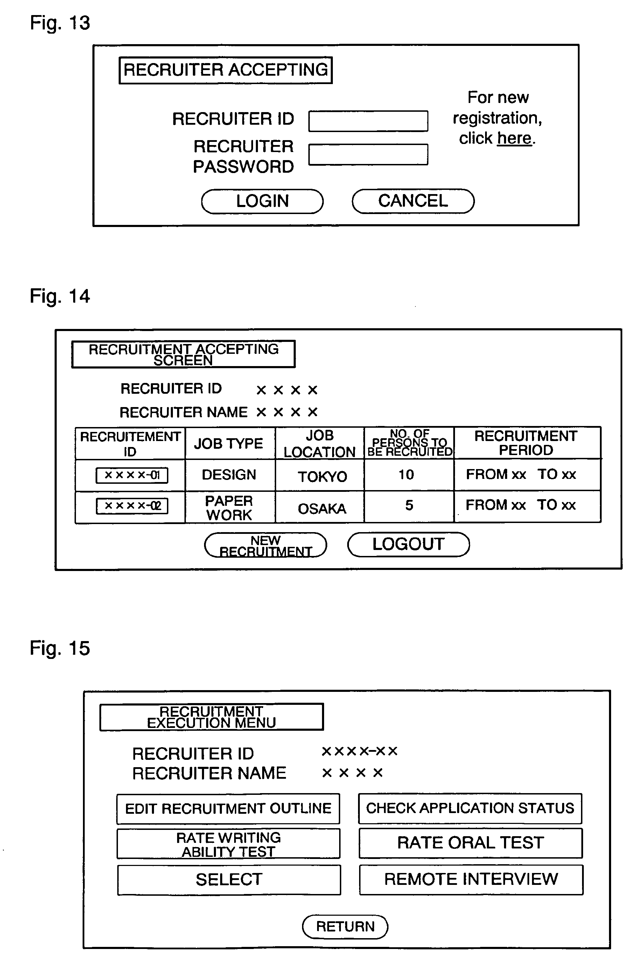

When a recruiter accesses a web page for recruiters from his/her terminal 40, a recruiter accepting screen shown in Fig. 13 appears (S102). When the "Login" button is clicked in the recruiter accepting screen (S104), a recruiter ID and a recruiter password entered by the recruiter are collated with a recruiter table (S106). For a regular recruiter, a recruitment accepting screen shown in Fig. 14 appears (S108). Otherwise, re-entry of a recruiter ID and a recruiter password is requested (S110). When "click here" is clicked, new registration is assumed (S112) and a recruiter registration screen (not shown) appears (S114). When the Register button is clicked in the recruiter registration screen (S116), a recruiter ID and a recruiter password are issued anew (S118) and information entered by the recruiter is registered in the recruiter table (S119) . The issued recruiter ID and recruiter password are sent to the E-mail address of the registered recruiter and are used for the recruiter to log in to the system.

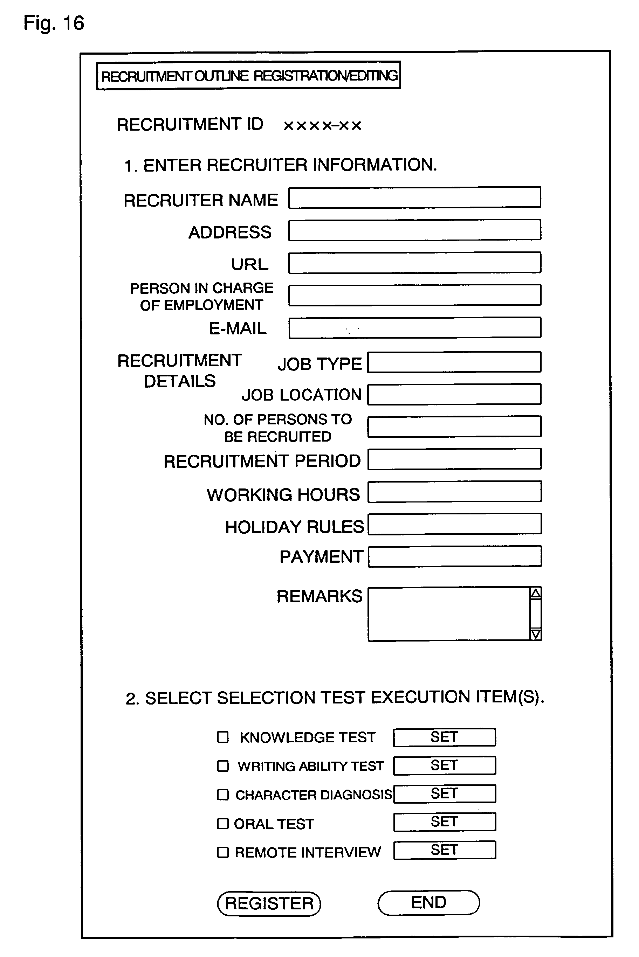

When "New Recruitment" is clicked in the recruitment accepting screen shown in Fig. 14 (S120), the recruitment outline registration/editing screen shown in Fig. 16 appears (S122). The recruiter enters a recruiter name, a recruiter address, a URL used to access the detailed information on the recruiter, a person in charge of employment, the E-mail address of the person in charge of employment and recruitment details. The recruitment details include a job type, a job location, the number of persons to be recruited, a recruitment period, working hours, holiday rules, allowance rules and comments.

The recruiter selects a selection test execution item to be executed in recruitment. The selection test execution items include a knowledge test for checking the knowledge of an applicant, a writing ability test for checking the writing ability of an applicant, a character diagnosis test for diagnosing the character of an applicant, an oral test for distributing registered video to an applicant to perform an interview, and a remote interview for performing an interview using a videophone between a recruiter and an applicant.

The recruitment outline registration/editing screen includes "Set" buttons for setting the execution outline of each selection test. A recruiter clicks each "Set" button to specify the execution outline of each selection test.

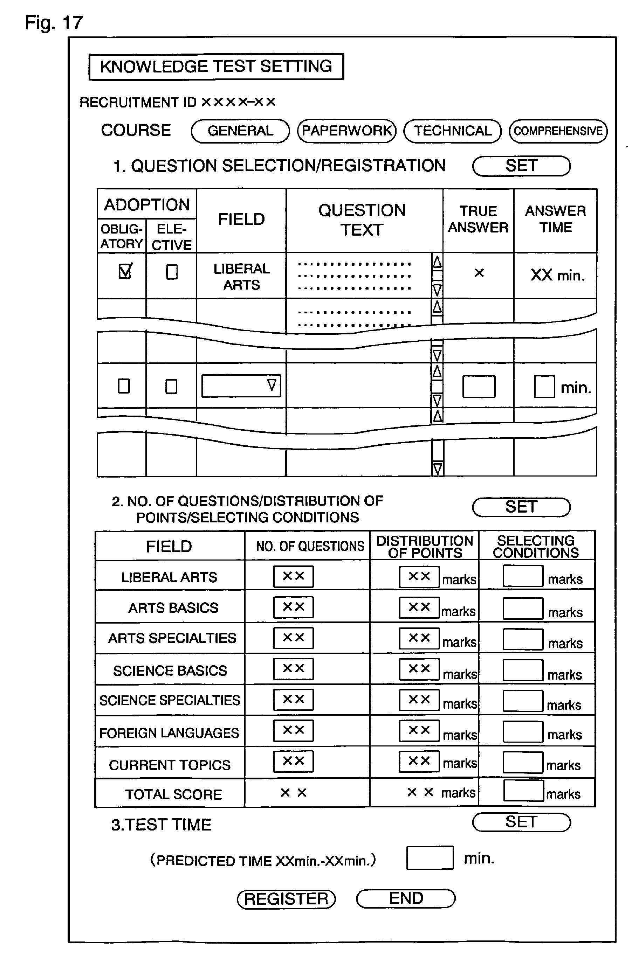

When the "Set" button for the knowledge test is clicked in the recruitment outline registration/editing screen (S124), the knowledge test setting screen shown in Fig. 17 appears (S126). When the recruiter specifies a course in the knowledge test setting screen, standard setting of the course is made. The courses include a general course for checking common knowledge, a paperwork course for checking necessary knowledge for paperwork applications, a technical course for checking necessary knowledge for technical applications, and a comprehensive course for checking comprehensive knowledge, with standard questions registered for respective courses. When the "Register" button is clicked with this setting, the standard setting is registered in the knowledge test setting table.

This system includes a function to customize the knowledge test setting in accordance with its intended purpose.

To customize the knowledge test setting, a question selection/registration is performed first. To add a new question, the field of questions is specified in the blank column of the question selection/registration section. Then, question text, a true answer and an answer time are entered and adoption is specified. While a selection-type question is used for which a true answer is made by way of entering a number or a symbol in order to allow automatic rating, a number or a symbol may be directly entered from a keyboard or a character string may be entered for comparison with a correct character string. While the fields of questions may include, for example, liberal arts, arts basics, arts specialties, science basics, science specialties, foreign languages, and current topics, the present invention is not limited thereto, and other items may be added or other classifications may be used. While the answer time is a standard time to answer the question and is used as a reference for determining the time limit mentioned later, each question may be specified to be answered within a certain time in order to omit specification of an answer time.

When addition of a question is completed, adoption of a registered question is specified. The adoption can be separately specified for either an obligatory question or an elective question in order to enable changes to a combination of questions per applicant in this example. When the "Set" button is clicked, the entered details are recorded.

Next, the number of questions presented to an applicant, distribution of points and selecting conditions are entered. In this example, the number of questions, distribution of points and selecting conditions can be specified individually per field mentioned earlier. The number of questions must be equal to or greater than the number of questions specified as obligatory per segment and equal to or less than the sum of the number of questions specified as obligatory and the number of questions specified as elective. Those questions presented to an applicant per field are all obligatory questions and questions randomly selected from elective questions whose number is equal to the number obtained by subtracting the number of obligatory questions from that of specified questions. Thus, important questions are presented to all applicants while the other questions differ from applicant to applicant. This ensures uniform evaluation of applicants and impartial evaluation to some extent even in a situation in which an applicant has acquired question information from another who has already taken the examination.

The selecting conditions are used to fail the applicants based on a knowledge test and may be specified per field of question or for a total mark. If the recruiter determines to fail no applicants at this stage, the column is left blank or 0 is entered. When the "Set" button is clicked, the total number of questions and the total point are displayed and the entered details are recorded.

Next, a test time is entered. In this example, a minimum time and a maximum time are calculated from the number of questions set above and the answer time of registered questions and the resulting minimum time and maximum time are displayed as predicted times. A recruiter refers to this data to determine and enter a test time. If the entered test time is inappropriate, the recruiter re-enters the data in the procedure for setting the number of questions and/or selection/registration of questions mentioned above. When the "Set" button is clicked, the entered test time is recorded.

While the number of questions in a preliminary selection test is determined and the test time is specified accordingly in this example, the test time alone may be specified and the questions that can be answered within the test time may be selected and presented. In such a case, questions that can be answered within the remaining time may be randomly selected and presented based on the total of answer times of obligatory questions.

Finally, when the "Register" button is clicked in the knowledge test setting screen, the setting is registered in the knowledge test setting table. When the "End" button is clicked, the knowledge test setting procedure is completed (S128).

While a course is selected from the standard courses set in accordance with the recruitment in the knowledge test setting procedure, the present invention is not limited thereto, and a recruiter may arbitrarily select from a large number of registered questions and/or optionally add questions to customize a course.

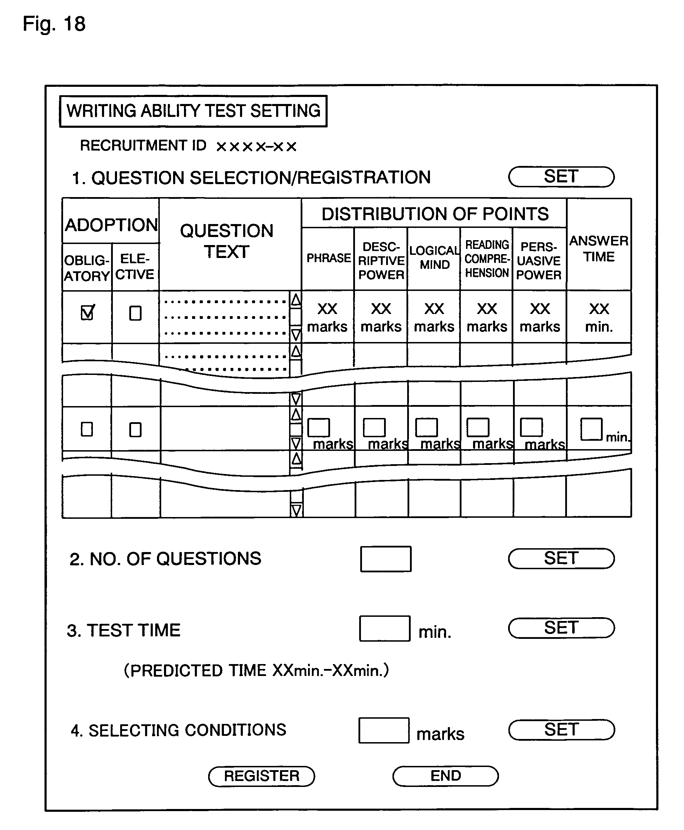

When the "Set" button for a writing ability test is clicked in the recruitment outline registration/editing screen (S129), the writing ability test setting screen shown in Fig. 18 appears (S130). A standard question is registered in the writing ability test. When the "Register" button is clicked with the default setting, the standard setting is registered in the writing ability test setting table.

This system also includes a function to customize the setting of a writing ability test in accordance with its intended purpose.

To customize writing ability test setting, a question selection/registration is performed first. To add a new question, question text is entered in the blank column of the question selection/registration section, and distribution of points in the evaluation items in rating and answer time are entered. While the evaluation items include five items, that is, a phrase, a descriptive power, a logical mind, reading comprehension, and a persuasive power, in this example, the present invention is not limited thereto, and may include other items or use other combinations of items. When addition of a question is completed, adoption of a registered question is specified. The adoption can be separately specified for either an obligatory question or an elective question in order to enable changes in the combination of questions per applicant, similar to the knowledge test. When the "Set" button is clicked, the entered details are recorded.

Next, the number of questions is entered. Similar to the knowledge test, the number of questions is equal to or greater than the number of questions specified as obligatory and equal to or less than the sum of the number of questions specified as obligatory and the number of questions specified as elective. Those questions actually presented to an applicant are all obligatory questions and questions randomly selected from elective questions whose number is equal to the number obtained by subtracting the number of obligatory questions from the number of specified questions. Thus, important questions are presented to all applicants while the other questions differ from applicant to applicant. This ensures uniform evaluation of applicants and impartial evaluation to some extent even when an applicant has acquired question information from another who has already taken the examination. When the "Set" button is clicked, the number of questions entered is recorded.

Next, a test time is entered. In this example, a minimum time and a maximum time required for answers of all of the questions are calculated from the number of questions set above and the answer time of registered questions and the resulting minimum time and maximum time are displayed as predicted times. A recruiter references this data to determine and enter a test time. In case the entered test time is inappropriate, the recruiter re-enters the data in the procedure for setting the number of questions and/or selection/registration of questions described above. When the "Set" button is clicked, the entered test time is recorded.

If the recruiter determines to fail an applicant in accordance with the rating result of the writing ability test, selection conditions are entered. If the recruiter determines to fail no applicants at this stage, the column is left blank or 0 is entered. When the "Set" button is clicked, the entered selection conditions are recorded.

Finally, when the "Register" button is clicked in the writing ability test setting screen, the setting is registered in the writing ability test setting table. When the "End" button is clicked, the writing ability test setting procedure is completed (S132).

Similar to the knowledge test, a function to specify fields of questions may be provided in order to customize and set a course in accordance with the intended purpose of recruitment in the writing ability test setting.

For test time procedure, similar to the knowledge test, the answer time of each question may be referenced to select a question.

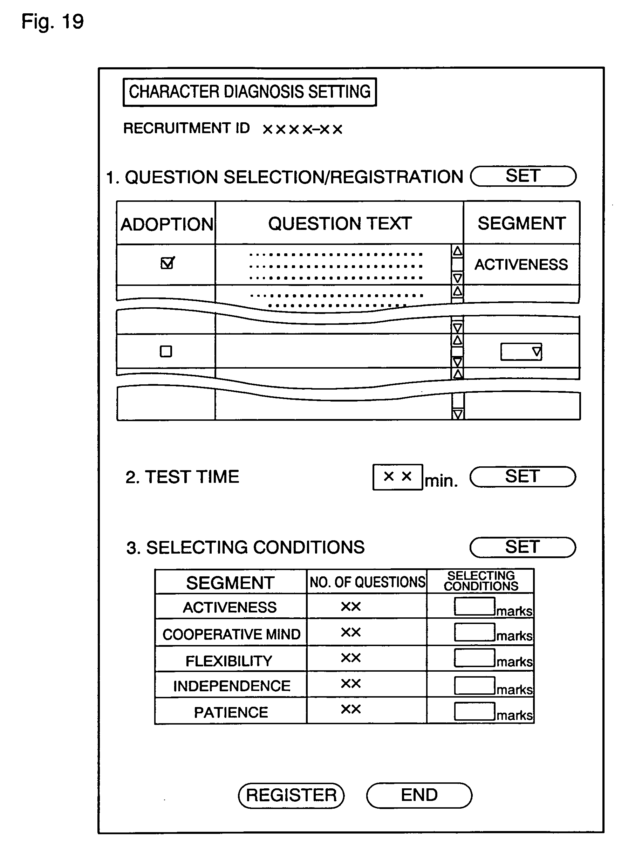

When the "Set" button for character diagnosis is clicked in the recruitment outline registration/editing screen (S134), the character diagnosis setting screen shown in Fig. 19 appears (S136). A standard question is registered in the character diagnosis setting screen. When the "Register" button is clicked with the default setting, the standard setting is registered in the character diagnosis setting table.

This system also includes a function to customize the setting of character diagnosis in accordance with its intended purpose.

To customize character diagnosis setting, a question selection/registration is performed first. To add a new question, question text is entered in the blank column of the question selection/registration section, and the evaluation segment of character diagnosis intended by the question is specified. The evaluation segments are character diagnosis parameters intended by the questions and include activeness, cooperative mind, flexibility, independence and patience in this example. The present invention, however, is not limited thereto, and may include other items or use other combinations of items. When addition of a question is completed, adoption of a registered question is specified. When the "Set" button is clicked, the number of questions per evaluation segment is determined and the entered details are recorded.

Next, a test time is entered. Since character diagnosis is a simple question and requires an intuitive answer, setting may be done in accordance with the number of questions selected during the question selection/registration. When the "Set" button is clicked, the entered details are recorded.

If the recruiter determines to fail an applicant during character diagnosis, selection conditions are entered. The selection conditions are specified per evaluation segment mentioned above. If the recruiter determines to fail no applicants at this stage, the column is left blank or 0 is entered.

Finally, when the "Register" button is clicked in the character diagnosis setting screen, the setting is registered in the character diagnosis setting table. When the "End" button is clicked, the character diagnosis setting procedure is completed (S138).

In character diagnosis, all applicants are evaluated using the same criteria, such that all selected questions are designated as obligatory questions. In order to prevent an intentional answer from an applicant who has previously obtained information on the questions, obligatory and elective questions may be provided and questions may be randomly selected from the elective questions so as to prepare different questions for different applicants, similar to the knowledge test.

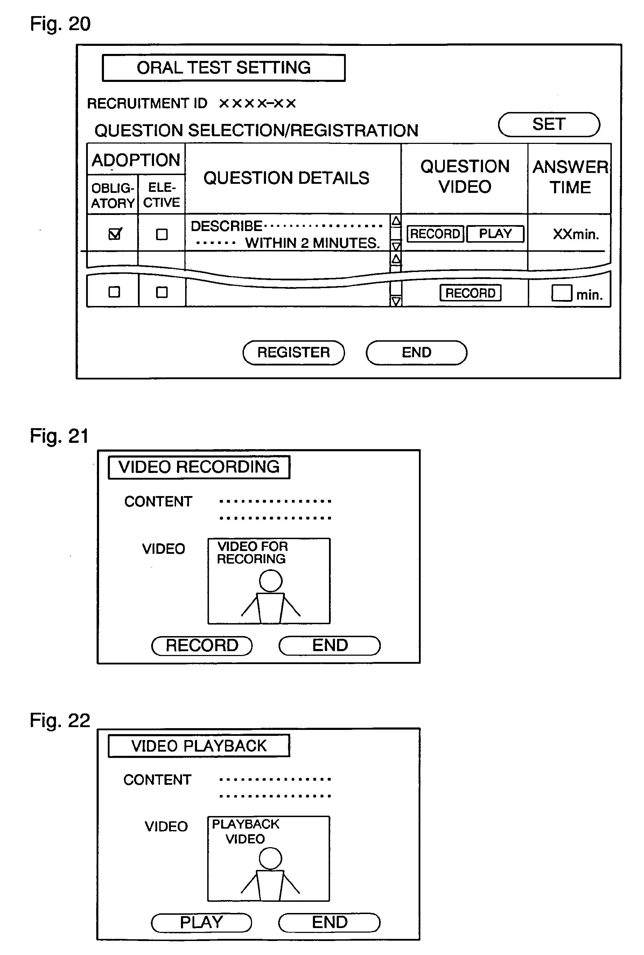

When the "Set" button for an oral test is clicked in the recruitment outline registration/editing screen (S140), the oral test setting screen shown in Fig. 20 appears (S142). In the oral test setting screen, standard questions are registered. When the "Register" button is clicked with the default setting, the standard setting details are registered in the oral test setting table. Details of a set question are provided in text in a question details column. When the "Play" button in a question video column is clicked, the video playback screen shown in Fig. 22 opens. When the "Play" button in the video playback screen is clicked, the recorded video is distributed to the recruiter terminal and played thereon.

This system includes a customizing function for a person in charge of employment on the recruiter side to register question video and voice in order to perform an oral test.

To register question video, question details are entered in text in the question details column and the "Record" button in the question video column is clicked. This records the question video. Then the answer time of an applicant is entered.

When the "Record" button in the question video column is clicked, the video recording screen shown in Fig. 21 opens. When the "Record" button in the video recording screen is clicked, television video is received from the recruiter terminal and the video is recorded until the "End" button is clicked. When the "Play" button in the question video column is clicked, the video playback screen shown in Fig. 22 opens. When the "Play" button in the video playback screen is clicked, the registered question video is transmitted to the recruiter terminal. When the "End" button is clicked during playback of question video, transmission of video to the recruiter terminal is stopped.

When recording of question video is completed, adoption of a registered question is specified. The adoption may be specified for either an obligatory question or an elective question in order to change a combination of questions per applicant, similar to the knowledge test. When the "Set" button is clicked, the entered details are recorded.

Finally, when the "Register" button is clicked in the oral test setting screen, the setting details are registered in the oral test setting table. When the "End" button is clicked, the oral test setting procedure is completed (S144).

Recording of the above-described question video is done by emulating a videophone terminal on an interview server 140 and receiving and recording television video via a two-way communications server 120 or directly from a recruiter terminal. Playback of a question video may be done by transmitting question video via the two-way communications server or directly to the recruiter terminal from the videophone terminal emulated on the interview server 140 and playing the question video using the videophone function of the recruiter terminal. Or, the question video may be distributed to a recruiter terminal via a web server for playback on the web browser. By emulating a videophone terminal on an interview server and communicating with a recruiter terminal, it is possible to provide an oral test setting function using a standard videophone program and a web browser, without installing a special communications program in the recruiter terminal.

While the question details are entered in text so as to facilitate editing and checking of the question details in an oral test, a word serving as a simple heading may be entered instead or entry may be omitted.

In the oral test, similar to the knowledge test, a function to specify fields of questions may be provided in order to set a course in accordance with the intended purpose of recruitment.

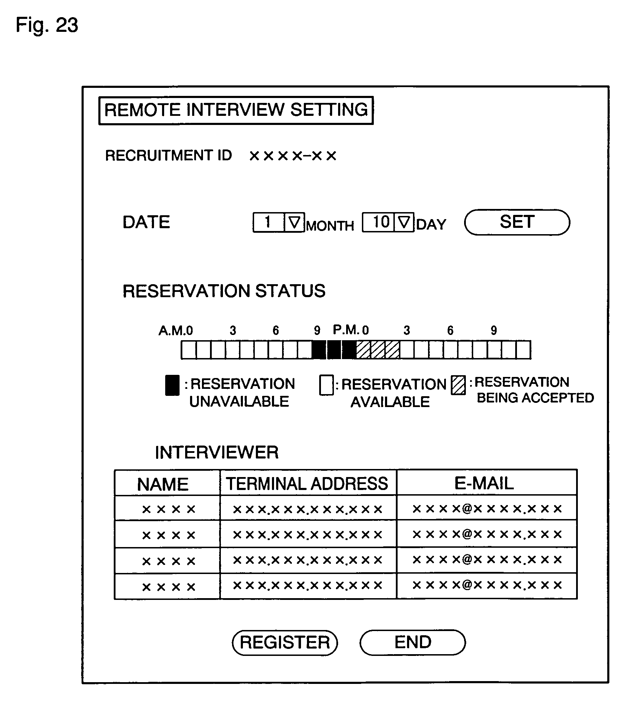

When the "Set" button for remote interview is clicked in the recruitment outline registration/editing screen (S146), the remote interview setting screen shown in Fig. 23 appears (S148). Setting of a remote interview includes reservation of a videophone to the two-way communications server 120, where a reserved date/time, the name of an interviewer, a terminal address and an E-mail address are registered. When the "Set" button for a date is clicked, a reservation status of the specified date is displayed. When the time slot under acceptance of reservation is clicked, the time slot is recorded. When the "Register" button is clicked, the setting details are registered in the remote interview setting table. When the "End" button is clicked, the remote interview setting procedure is completed (S150).

When the "Register" button is clicked in the recruitment outline registration/editing screen (S152), the setting is registered in the recruitment table (S154) and a registration completion screen (not shown) is displayed (S156).

When the "Return" button is clicked in the recruitment outline registration/editing screen (S158), execution returns to S108.

If a specific recruitment ID is clicked in the recruitment accepting screen shown in Fig. 14 (S160), a recruitment execution menu screen shown in Fig. 15 is displayed (S162).

When the "Edit Recruitment Outline" button is clicked in the recruitment execution menu screen (S164), the recruitment outline registration/editing screen shown in Fig. 16 appears. This enables the registered setting of recruitment outline to be edited using the same procedure as the registration of recruitment outline mentioned earlier.

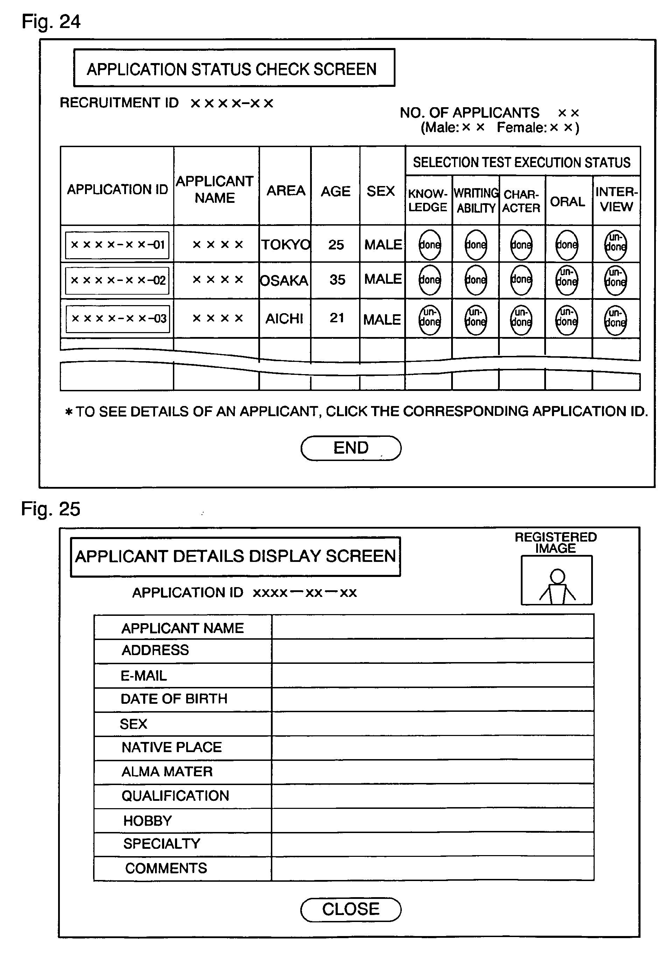

When the "Check Application Status" button is clicked in the recruitment execution menu screen (S170), the application status check screen shown in Fig. 24 appears (S172). As understood from Fig. 24, the application status check screen shows the current number of applicants, application ID of each applicant, an applicant name, geographic area, age, sex and selection test execution status. When the application ID of each applicant is clicked, the applicant details display screen shown in Fig. 25 opens to allow review of the detailed profile registered by each applicant. When the "End" button is clicked in the application status check screen, the application status check procedure is completed (S174).

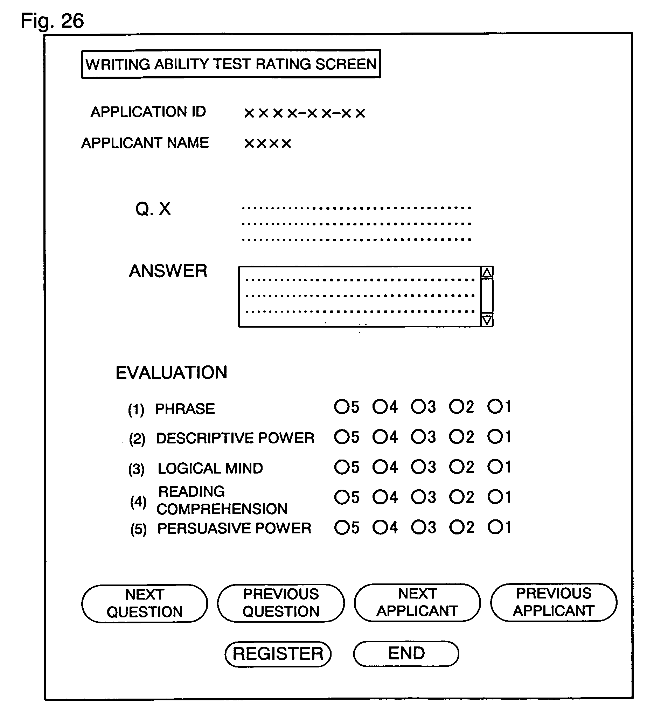

When the "Rate Writing Ability Test" button is clicked in the recruitment execution menu screen (S176), the writing ability test rating screen shown in Fig. 26 appears (S178). As seen from Fig. 26, the writing ability test rating screen shows the question text and the answer of an applicant as well as a button used to enter evaluation for each evaluation item of the writing ability test. In the lower area of the screen, the "Next Question" button and the "Previous Question" button are provided. The person in charge of rating clicks these buttons to evaluate the answer to each question, thus rating the answer of each applicant. In the lower area of the screen the "Next Applicant" button and the "Previous Applicant" button are also provided, which provides for rating of all applicants who have taken the writing ability test. In this case, it is also possible to sequentially rate the answers of applicants to a same question while comparing the answers with each other, thereby enabling impartial evaluation.

While rating is performed using a five-level evaluation using corresponding buttons in this example, the present invention is not limited thereto, and an arbitrary score may be entered.

Finally, when the "Register" button is clicked in the writing ability test rating screen, the rating result is registered in the rating selection table. When the "End" button is clicked, the writing ability test rating procedure is completed (S180).

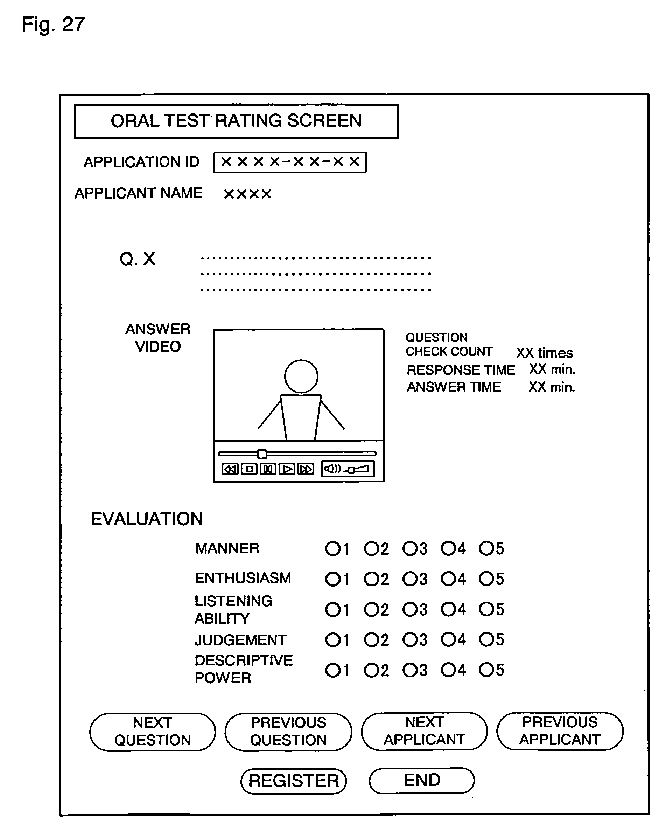

When the "Rate Oral Test" button is clicked in the recruitment execution menu screen (S182), the oral test rating screen shown in Fig. 27 appears (S184). As seen from Fig. 27, the oral test rating screen shows the answer video of an applicant corresponding to the transmitted question test as well as a button used to enter evaluation for each evaluation item of the oral test. The answer video of an applicant can be checked as often as necessary via operation of the playback control provided in the lower area of the answer video display. To the right of the answer video display are displayed the count of question check by an applicant, response time and answer time, which a person in charge of rating can refer to in determining the listening ability and comprehension of an applicant. In the lower area of the screen the "Next Question" button and the "Previous Question" button are provided. The person in charge of rating clicks these buttons to evaluate the answer to each question, thus rating the answer of each applicant. In the lower area of the screen the "Next Applicant" button and the "Previous Applicant" button are also provided, which enable rating of all applicants who have taken the oral test. In this case, it is also possible to sequentially rate the answers of applicants to a same question while comparing the answers with each other, thereby enabling impartial evaluation.

While rating is performed using a five-level evaluation using corresponding buttons in this example, the present invention is not limited thereto, and an arbitrary score may be entered.

The answer video stored in an interview server may be distributed to a recruiter terminal via a web server for playback on a web browser. Or, the answer video may be transmitted to a videophone terminal emulated on the interview server for playback using the videophone function of the recruiter terminal.

Finally, when the "Register" button is clicked in the oral test rating screen, the rating result is registered in the rating selection table. When the "End" button is clicked, the oral test rating procedure is completed (S186).

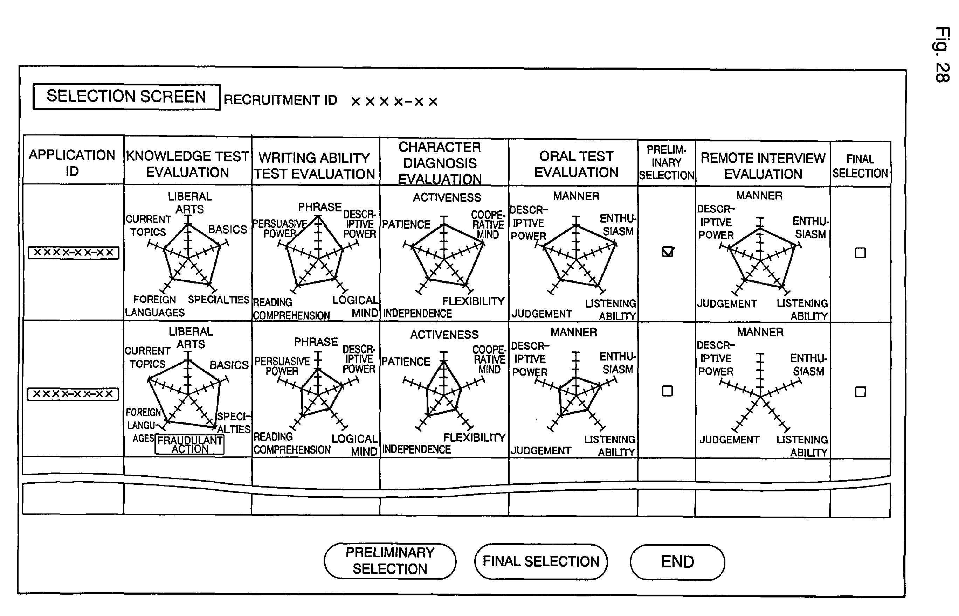

When the "Select" button is clicked in the recruitment execution menu screen (S188), the selection screen shown in Fig. 28 appears (S190). As seen from Fig. 28, the selection screen shows the evaluation results of each selection test for each applicant in a bar chart format. By displaying the evaluation results in a bar chart, a recruiter can easily evaluate the characteristics of each applicant, thus enabling a comparison of a large number of applicants with each other and selection of desired persons rapidly and appropriately. Details of evaluation in each test can be reviewed by clicking the bar chart display.

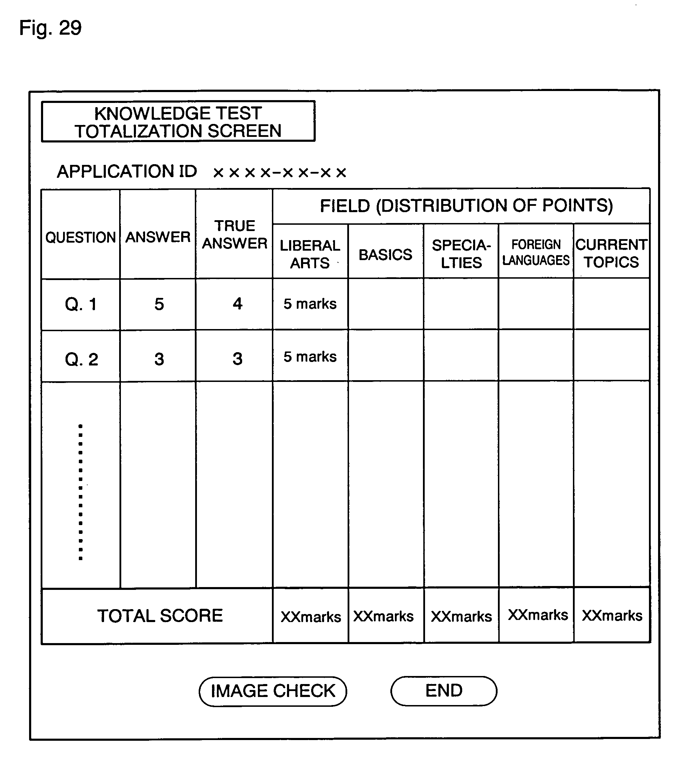

When the bar chart of the knowledge test evaluation is clicked, the knowledge test compilation screen shown in Fig. 29 appears. As shown in Fig. 29, the knowledge test compilation screen shows an answer and the true answer to each question compiled in accordance with the distribution of points set per segment in the knowledge test setting.

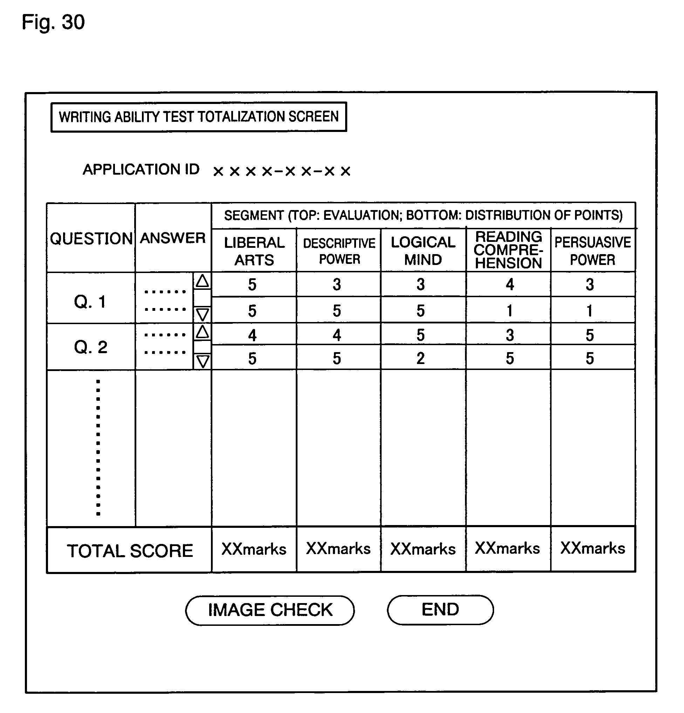

When the bar chart of writing ability test evaluation is clicked, the writing ability test compilation screen shown in Fig. 30 appears. As shown in Fig. 30, the writing ability test compilation screen shows an answer to each question, where evaluation by the recruiter per evaluation item is compiled in accordance with the distribution of points set in the writing ability test setting.

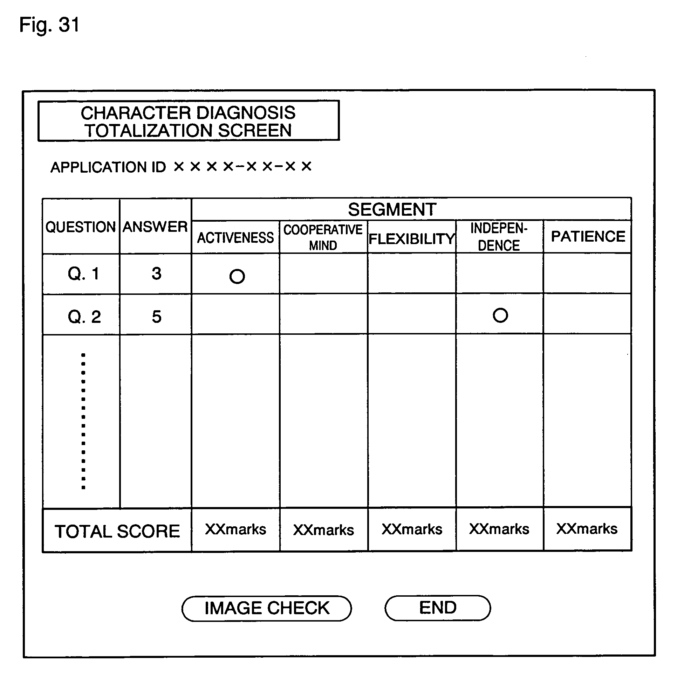

When the bar chart of character diagnosis evaluation is clicked, the character diagnosis compilation screen shown in Fig. 31 appears. As shown in Fig. 31, the character diagnosis compilation screen shows an answer to each question compiled in accordance with the segments set in the character diagnosis setting.

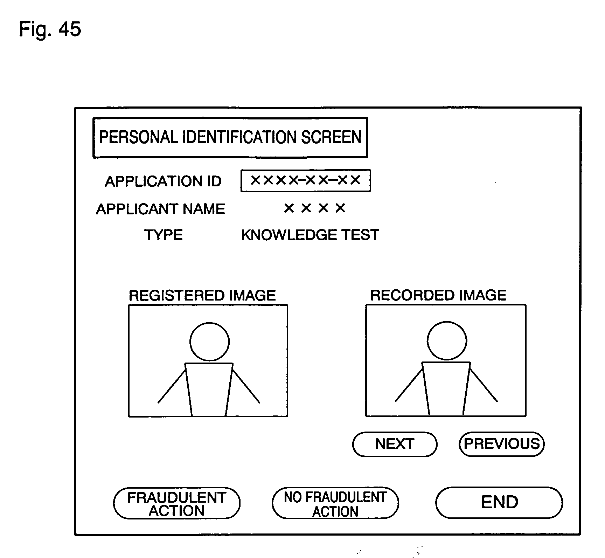

In the knowledge test, writing ability test and character diagnosis, personal identification is provided, as will be described below. If the result of collating the image of an applicant acquired during the selection test with the registered image does not satisfy a predetermined match, the acquired image is recorded with a fraudulent action flag set. If a fraudulent action flag is set, "Fraudulent action" is displayed in the bar chart of the selection screen, causing the compilation screen for the selection test to display the "Image Check" button. When the "Image Check" button in the compilation screen for the selection test is clicked, the personal identification screen shown in Fig. 45 appears and displays a registered image and a recorded image side by side. If a plurality of images are recorded, the "Next" button and the "Previous" button are displayed. By clicking these buttons, it is possible to check all recorded images. This enables a selector to determine whether the applicant is involved in fraudulent action, such as taking an examination as a substitute for an applicant. If it is determined that the applicant is involved in fraudulent action, the selector clicks the "Fraudulent Action" button, which displays "Fraudulent Action" in the bar chart of the selection screen. If it is determined that no fraudulent action has been taken, such as in the case of a poor image quality, the selector clicks the "No Fraudulent Action" button, which displays "No Fraudulent Action" in the bar chart of the selection screen. As a result, the recruiter can select an applicant while checking whether the applicant is involved in fraudulent action, such as taking an examination as a substitute for an applicant.

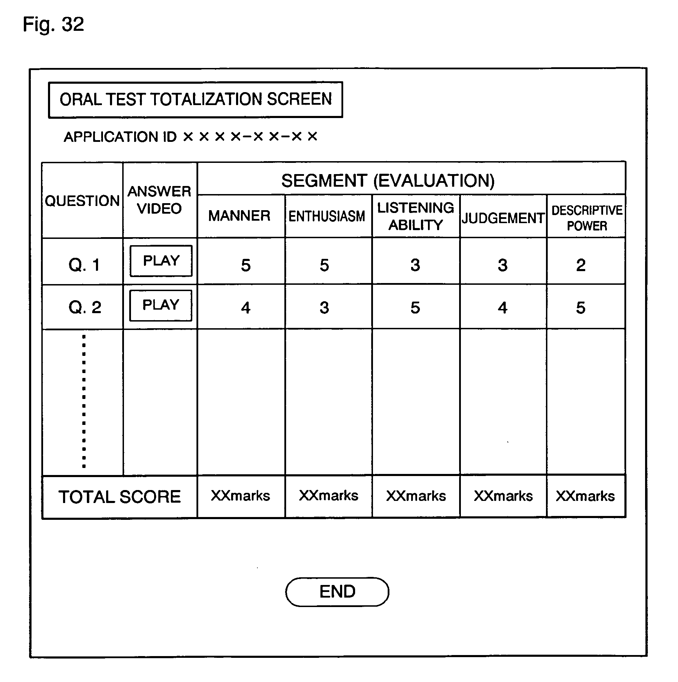

When the bar chart of oral test evaluation is clicked, the oral test compilation screen shown in Fig. 32 appears. As shown in Fig. 32, the oral test compilation screen provides for review of answer video corresponding to each question by clicking the "Play" button. This screen displays an evaluation compiled by segment.

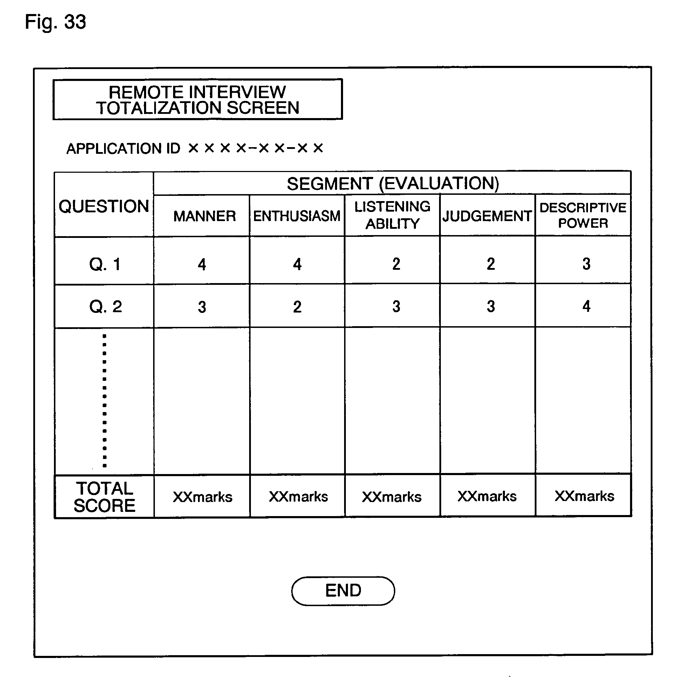

When the bar chart of remote interview evaluation is clicked, the remote interview compilation screen shown in Fig. 33 appears. As shown in Fig. 33, the remote interview compilation screen displays evaluation on each question compiled by segment.

Similar to the oral test, in the remote interview, the answer video of an applicant may be recorded and the recorded answer video of the oral test may be reproduced by clicking the "Play" button in the remote interview compilation screen.

A recruiter selects a remote interview candidate based on the knowledge test evaluation, writing ability test evaluation, character diagnosis evaluation and oral test evaluation, and clicks the "Preliminary Selection Notice" button. When the "Preliminary Selection" button is clicked in the selection screen, a remote interview notice e-mail specifying the date and time of the remote interview is transmitted to the selected applicant. The date and time of remote interview is selected from the time slots reserved in the remote interview setting mentioned earlier. In the remote interview notice, the remote interview time slots reserved by the recruiter may be presented for an applicant to click a desired data and time in order to determine the specific remote interview date and time.

When the remote interview with an applicant is completed, the evaluation result of the remote interview is displayed in a bar chart. A recruiter makes a final selection of an applicant based on the evaluation results to select the applicant and click the "Final Selection" button. If the evaluation of the remote interview is below the level expected by the recruiter, the evaluation in the preliminary selection may be reviewed to select an applicant candidate for the remote interview. By listing the evaluation results in the selection test, it is possible to avoid overlooking an excellent applicant from a general viewpoint even if he/she has failed in the preliminary selection.

When the "Final Selection" button is clicked, a final selection notice e-mail is transmitted to the selected applicant. The applicant who has passed the final selection may be employed, or a direct interview with the applicant may be conducted to determine employment of the applicant.

When the "End" button is clicked in the selection procedure screen, the selection procedure is complete (S192).

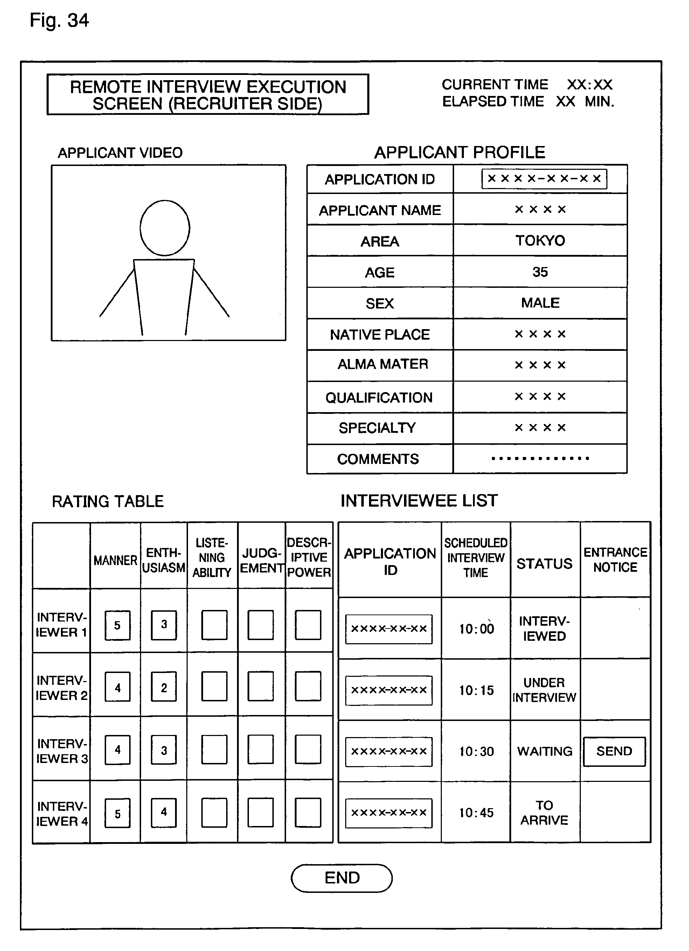

When a predetermined period before the remote interview reserved by a recruiter is reached, the "Remote Interview" button is displayed in the recruitment execution menu screen. When the "Remote Interview" button is clicked (S192), the remote interview execution screen (recruiter side) shown in Fig. 34 appears (S194). The remote interview execution screen (recruiter side) displays the video of an applicant being connected as shown, beside which is displayed the profile of the applicant. In the lower left corner of the screen is provided a rating table for an interviewer to enter evaluation of each interviewer. In the lower right corner of the screen is displayed an interview candidate list. The interview candidate list displays an application ID, a scheduled remote interview date/time, connection status, and an entrance notice button. In the status section, an applicant who has undergone an interview is tagged as "Interviewed" , an applicant who is currently being interviewed as "Under Interview", an applicant who has logged in for an interview and is in a waiting room mentioned later as "Waiting", and an applicant who has not entered the waiting room as "To Arrive". The entrance notice section for an applicant who has entered the waiting room displays the "Send" button. When the "Send" button is clicked, a notice to prompt entrance is transmitted to the applicant, with the "Enter" button displayed in the waiting room screen on the applicant terminal. When the applicant clicks the "Enter" button, the terminal address of the applicant terminal is set in the destination table of the two-way communications server 120 and the video of the applicant is displayed in the remote interview execution screen (recruiter side), thus starting an interview. When the interview with the applicant is completed, the interviewer notifies the applicant that the interview has been completed. The applicant clicks the "Exit" button in the remote interview execution screen (applicant side) to release the connection with the applicant terminal. For the convenience of a recruiter, the remote interview execution screen (recruiter side) displays a current time and time elapsed since the start of the remote interview. When the "End" button is clicked in the remote interview execution screen (recruiter side), the remote interview execution procedure is completed (S198).

When the "Return" button is clicked in the recruitment execution menu screen (S200), execution returns to S108.

When the "Logout" button is clicked in the recruitment accepting screen (S202), a system logout is performed to complete the recruitment registration procedure.

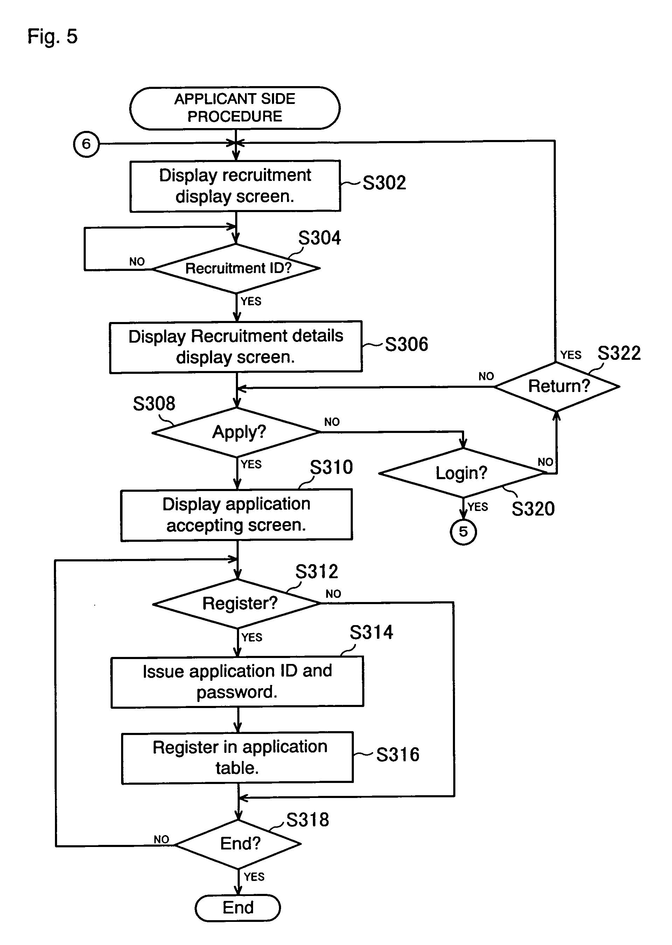

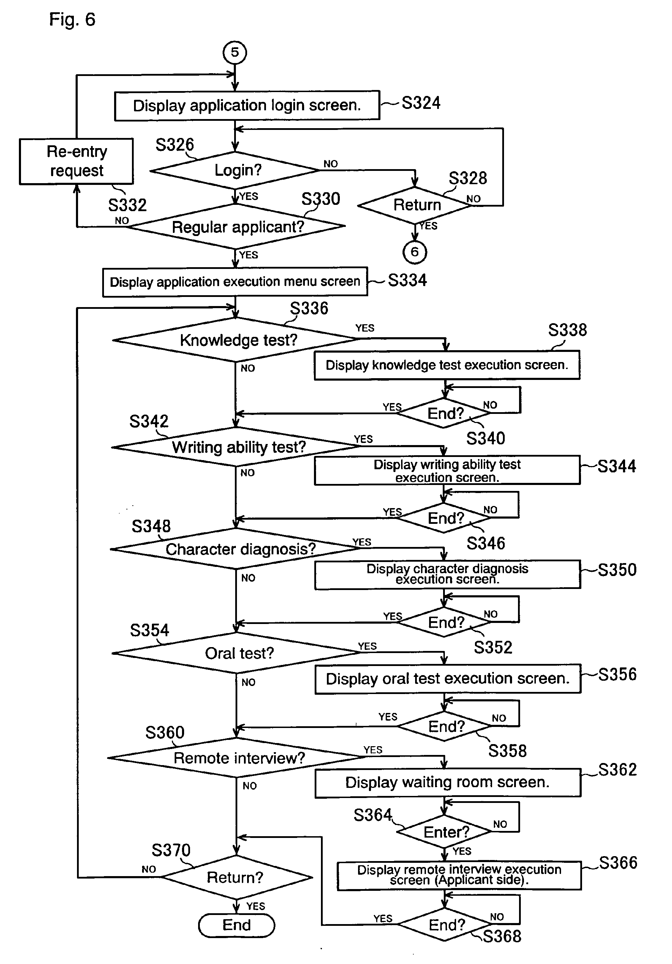

Figs. 5 and 6 show the procedure on the applicant side.

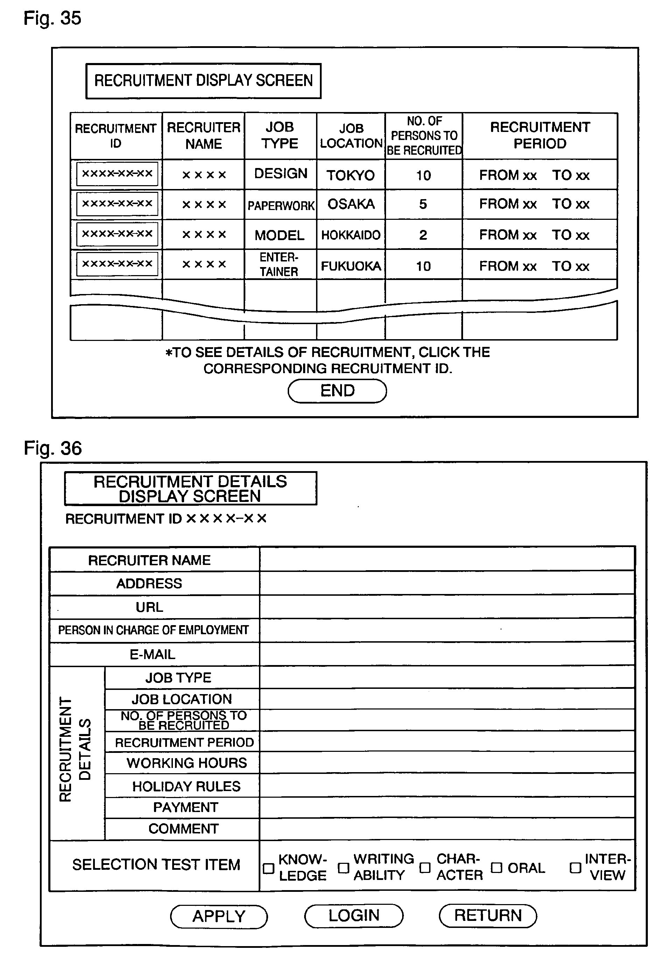

When an applicant accesses a web page for an applicant from an applicant terminal, the recruitment display screen shown in Fig. 35 appears (S302). The recruitment display screen listing currently registered recruitments displays a recruitment outline such as a recruitment ID, a recruiter name, a job type, a job location, the number of persons to be recruited, and a recruitment period.

When the recruitment ID is clicked in the recruitment display screen (S304), the recruitment details display screen shown in Fig. 36 appears (S306). This enables an applicant to check the recruitment details and click the "Apply" button to apply for the recruitment. When the applicant has already applied for the recruitment, he/she clicks the "Login" button to conduct the selection test of the recruitment.

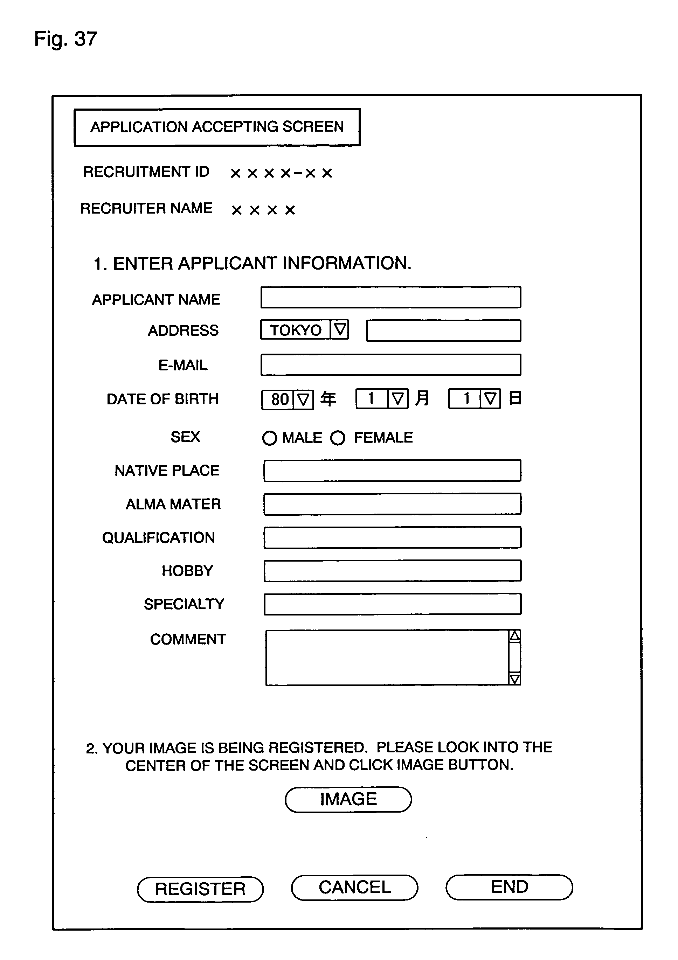

When the "Apply" button is clicked in the recruitment details display screen (S308), the application accepting screen shown in Fig. 37 appears (S310). The application accepting screen prompts an applicant to enter applicant information including, for example, an applicant name, address, E-mail address, date of birth, sex, native place, alma mater, qualification, hobby, specialty and comments, and to register the image of the applicant for use in the personal identification in the knowledge test, writing ability test and character diagnosis. The image of an applicant, similar to the oral test, is recorded as a segmented still image from a television video obtained by emulating a videophone terminal on the interview server 140, directly receiving television video via the two-way communications server 120 or directly from an applicant terminal, and clicking the "Image" button. Thus, as long as the applicant terminal is a terminal having a videophone function, it is possible to register an applicant image without installing a special program.

When the "Register" button is clicked in the application accepting screen, an application ID and an application password are issued to the applicant (S314) and registered in the application table together with the entered applicant information and recorded applicant image (S316). The issued application ID and application password are sent to the E-mail address of the registered applicant and are used by the applicant to log into the system to take a selection test.

When the "End" button is clicked in the application accepting screen (S318), the applicant registration procedure is completed.

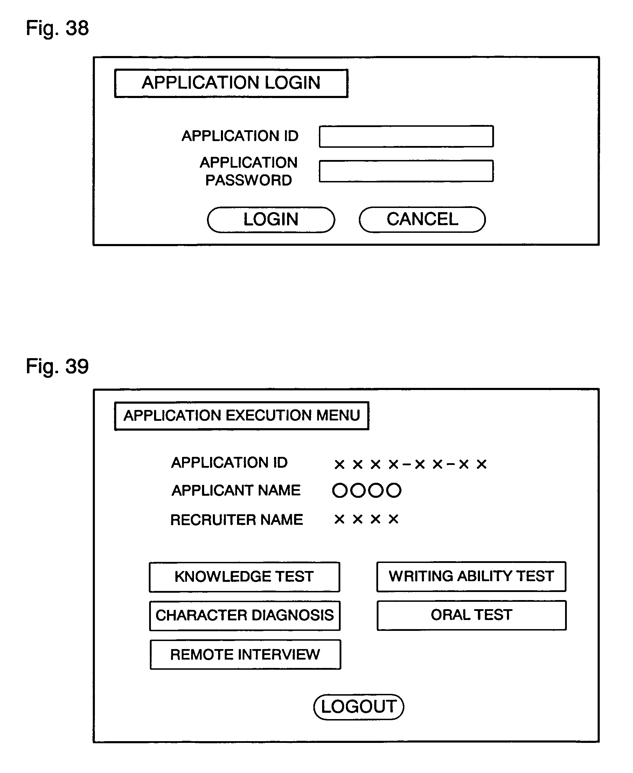

When the "Login" button is clicked in the recruitment details display screen (S320), the application login screen shown in Fig. 38 appears (S324). When the "Return" button is clicked in the recruitment details display screen (S322), execution returns to S302 , and the recruitment details display screen appears for selecting another recruitment ID.

When the "Login" button is clicked in the application login screen (S326), the entered application ID and application password are collated with those of an applicant registered in the application table (S330). For a regular applicant, the application execution menu screen shown in Fig. 39 appears (S334). Otherwise, re-entry of data is prompted (S332).

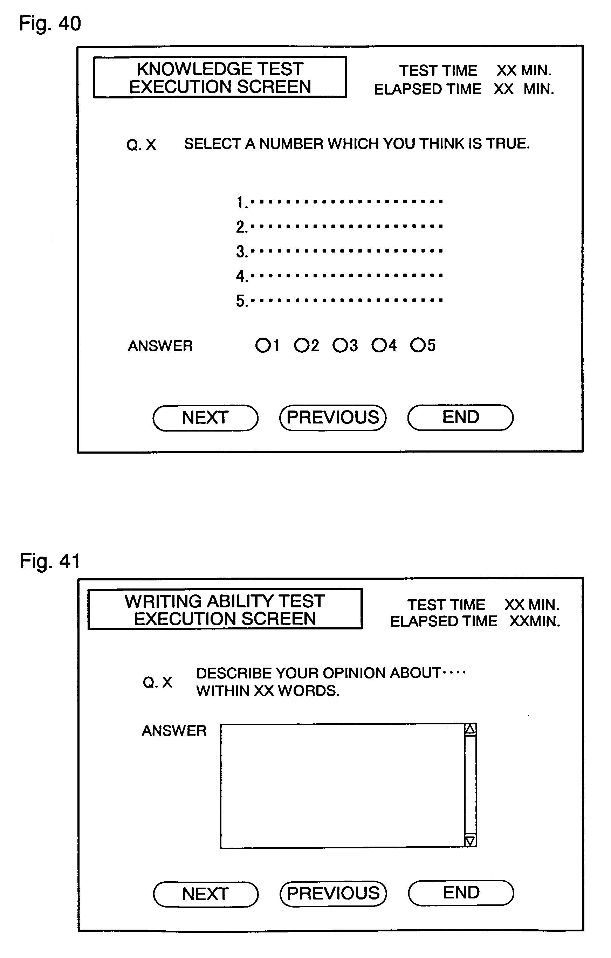

When the "Knowledge Test" button is clicked in the application execution menu screen (S336), the knowledge test execution screen shown in Fig. 40 appears (S338). In the knowledge test execution screen, questions registered in the knowledge test setting table are selected under specified conditions and sequentially presented. As shown in Fig. 40, question text for choosing which one of the five given answers is correct is displayed and an applicant uses a button to choose one. When the "Next" button is clicked, execution proceeds to the next question. When the "Return" button is clicked, execution returns to the previous question. Finally, when the "End" button is clicked, the entered answer is registered in the rating selection table. For the convenience of an applicant, the knowledge test execution screen displays the test time and the time elapsed since the start of the test.

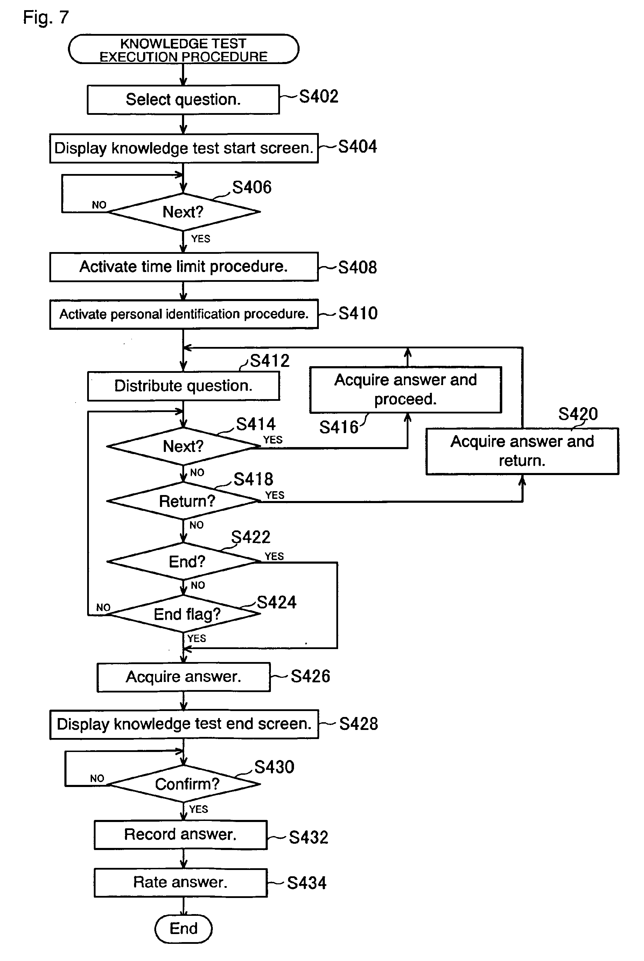

Fig. 7 shows an example of knowledge test execution procedure. As shown in Fig. 7, a question is selected from the knowledge test setting table (S402), and a knowledge test start screen (not shown) explaining the execution outline of the knowledge test appears (S404). When the "Next" button is clicked in the knowledge test start screen, a time limit procedure discussed later is activated (S408), which starts a personal identification procedure discussed later (S410). Next, selected questions are sequentially retrieved and distributed to an applicant terminal (S412). When the "Next" button is clicked (S414), the answer of the applicant is acquired and execution proceeds to the next question (S416). When the "Return" button is clicked (S418), the answer of the applicant is acquired and execution returns to the previous question (S420). When the "End" button is clicked (S422) or an end flag is set by the time limit processing (S424), the answer is acquired (S426) and a knowledge test end screen (not shown) is displayed for the applicant to confirm the end of test (S428) . When the "Confirm" button is clicked in the knowledge test end screen (S430), the acquired answer is recorded in the rating selection table (S432) and the recorded answer is rated in accordance with the settings in the knowledge test setting table (S434), and the knowledge test ends (S340).

When the "Writing Ability Test" button is clicked in the application execution menu screen (S342), the writing ability test execution screen shown in Fig. 41 appears (S344). In the writing ability text execution screen, questions registered in the writing ability test setting table are selected under specified conditions and sequentially presented. As shown in Fig. 41, an applicant enters a text answer to the question. When the "Next" button is clicked, execution proceeds to the next question. When the "Return" button is clicked, execution returns to the previous question. Finally, when the "End" button is clicked, the entered answer is registered in the rating selection table. For the convenience of an applicant, the writing ability test execution screen displays the test time and the time elapsed since the start of the test.

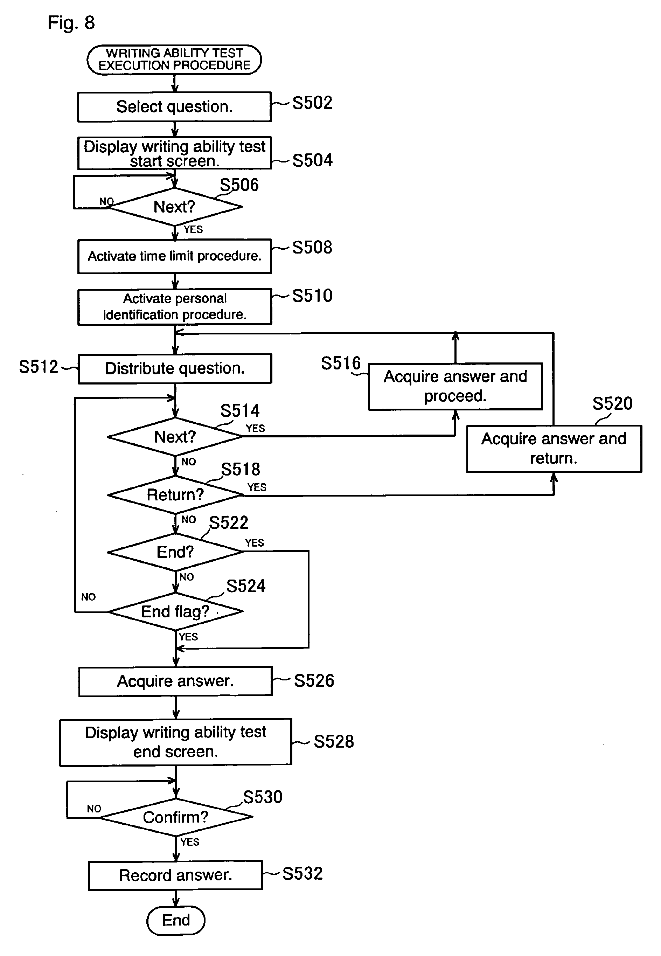

Fig. 8 shows an example of a writing ability test execution procedure. As shown in Fig. 8, a question is selected from the writing ability setting table (S502), and a writing ability test start screen (not shown) explaining the execution outline of the writing ability test appears (S504). When the "Next" button is clicked in the writing ability test start screen (S506), a time limit procedure discussed later is activated (S508), which starts a personal identification procedure discussed later (S510). Next, selected questions are sequentially retrieved and distributed to an applicant terminal (S512). When the "Next" button is clicked (S514), the answer of the applicant is acquired and execution proceeds to the next question (S516). When the "Return" button is clicked (S518), the answer of the applicant is acquired and execution returns to the previous question (S520). When the "End" button is clicked (S522) or an end flag is set by the time limit processing (S524), the answer is acquired (S526) and a writing ability test end screen (not shown) is displayed for the applicant to confirm the end of test (S528). When the "Confirm" button is clicked in the writing ability test end screen (S530), the acquired answer is recorded in the rating selection table (S532) and the writing ability test ends (S346).

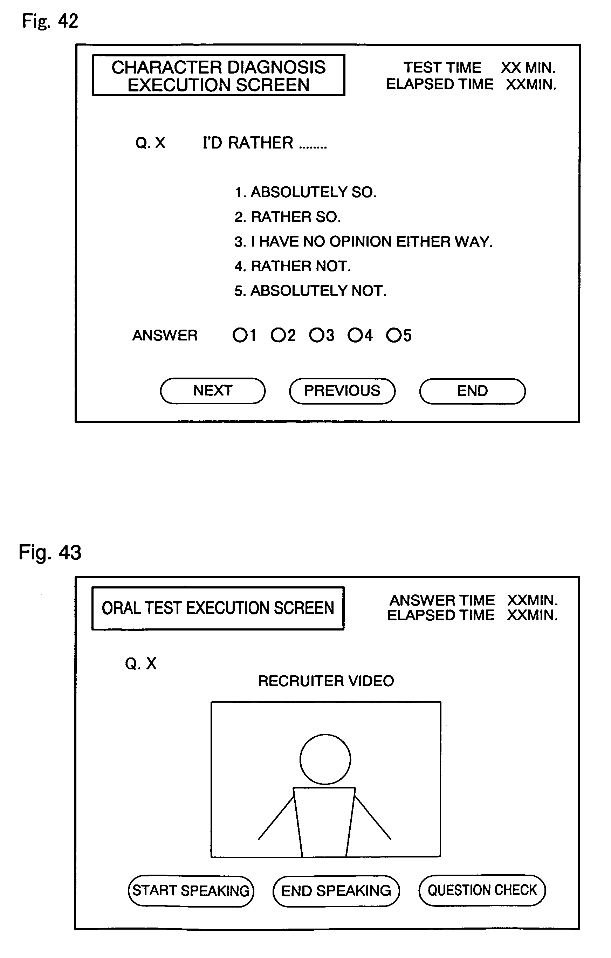

When the "Character Diagnosis" button is clicked in the application execution menu screen (S348), the character diagnosis execution screen shown in Fig. 42 appears (S350). In the character diagnosis execution screen, questions registered in the character diagnosis setting table are sequentially presented. As shown in Fig. 42, question text for choosing which one of the five given answers is correct is displayed and an applicant uses a button to choose one. When the "Next" button is clicked, execution proceeds to the next question. When the "Return" button is clicked, execution returns to the previous question. Finally, when the "End" button is clicked, the entered answer is registered in the rating selection table. For the convenience of an applicant, the character diagnosis execution screen displays the test time and the time elapsed since the start of the test.

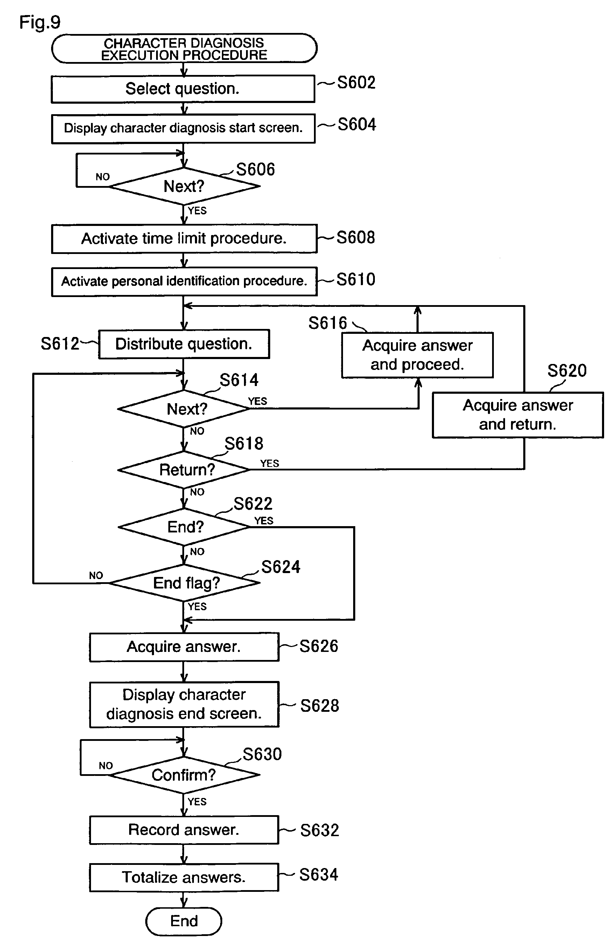

Fig. 9 shows an example of character diagnosis execution procedure. As shown in Fig. 9, a question is selected from the character diagnosis setting table (S602), and a character diagnosis start screen (not shown) explaining the execution outline of the character diagnosis appears (S604). When the "Next" button is clicked in the character diagnosis start screen (S606), a time limit procedure discussed later is activated (S608), and a personal identification procedure discussed later is activated (S610). Next, selected questions are sequentially retrieved and distributed to an applicant terminal (S612). When the "Next" button is clicked (S614), the answer of the applicant is acquired and execution proceeds to the next question (S616). When the "Previous" button is clicked (S618), the answer of the applicant is acquired and execution returns to the previous question (S620). When the "End" button is clicked (S622) or an end flag is set by the time limit processing (S624), the answer is acquired (S626) and a character diagnosis end screen (not shown) is displayed for the applicant to confirm the end of character diagnosis (S628) . When the "Confirm" button is clicked in the character diagnosis end screen (S630), the acquired answer is recorded in the rating selection table (S632), the recorded answer is rated according to the setting of the character diagnosis setting table (S634) and the character diagnosis ends (S352).

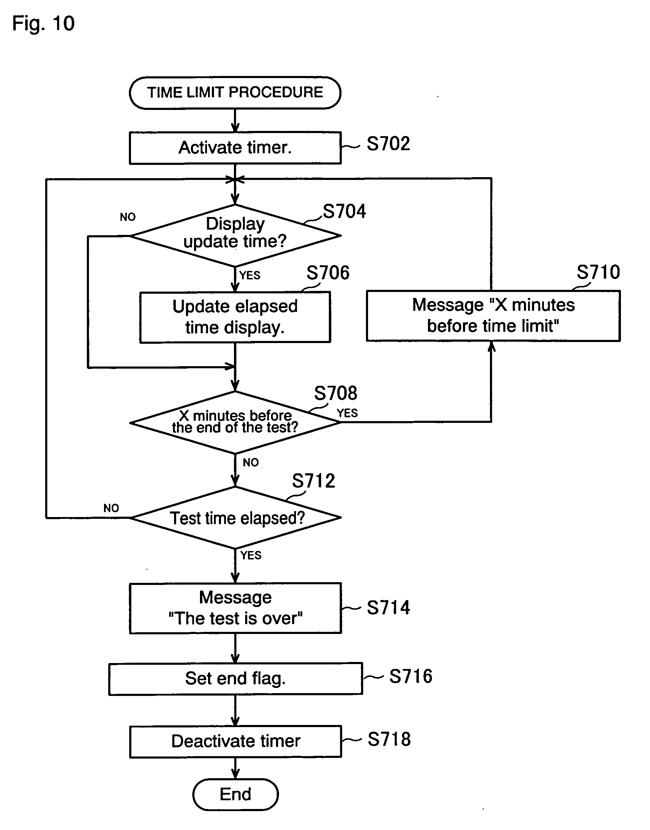

Fig. 10 shows an example of time limit procedure. As shown in Fig. 10, a timer is activated first (S702). When a time is reached to update the display (S704), the elapsed time display in the screen is updated (S706). When X minutes remain before the end of the test (S708), a message "X minutes before time limit" is issued (S710). When the test time has elapsed (S712), a message "The test is over" is issued (S714), the end flag is set (S716), the timer is deactivated (S718), and the test ends. The message may be a voice message or a pop-up message.

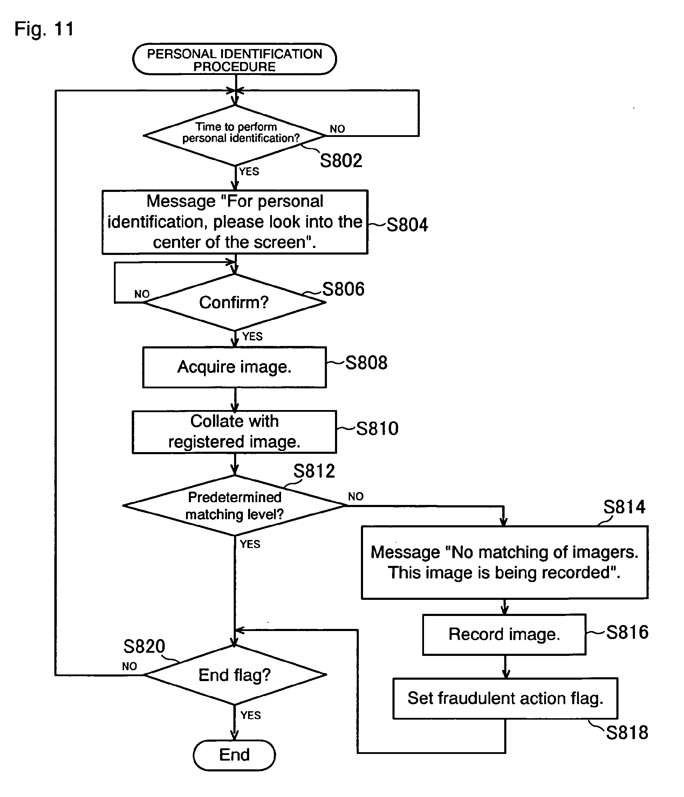

Fig. 11 shows an example of personal identification procedure. As shown in Fig. 11, when it is time to perform personal identification (S802), a message screen (not shown) "For personal identification, please look into the center of the screen" is displayed (S804). Personal identification may be performed at predetermined intervals although it is desirable that personal identification be performed at a random time so as to prevent an applicant from predicting the identification time. When the "Confirm" button in the message screen is clicked (S806), television video of the applicant terminal is received and a segmented still image is acquired therefrom (S808), and collated with the corresponding applicant image registered in the application table (S810). Images are collated through direct matching with the acquired image by using the registered image as a template to obtain the most matching points. The acquired image may undergo the feature retrieveing operation that obtains features such as a contour and position/shape of eye, nose and mouth in order to normalize the image size followed by matching. Or, the image of the applicant may be compared with the results of the feature retrieveion. If a predetermined matching level is not obtained as result of collation (S812), a message "No matching of imagers. This image is being recorded," is issued (S814) and the acquired image is additionally registered in the applicant table for later review by a recruiter (S816), then a fraudulent action flag is set (S818). The reason that the image is additionally registered if a predetermined matching level is not obtained is, collating of images is not particularly reliable. Thus, an image that failed to obtain a predetermined matching level is recorded for later review by the recruiter. If collating of images is sufficiently reliable, a message, for example, "fraudulent action detected" may be issued to an applicant and the selection test is aborted. Or, the image of an applicant may be recorded without collating the images during the test and the recruiter may sequentially retrieve the recorded images for review. These steps are repeated from S802, and when the end flag is set (S820), personal identification is completed.

Similar to the registration of an applicant image discussed earlier, in the process of acquiring an applicant image, a videophone terminal is emulated on an interview server 140 and television video is received via a two-way communications server 120 or directly from a recruiter terminal, and a segmented still image from the television video is recorded as an applicant image.

While the procedure used in a case in which the "Confirm" button is not clicked for a predetermined period in the message screen at S804 is not described in the above-described embodiment, fraudulent action could be performed in the meantime. Thus, a warning may be issued to an applicant or an applicant image may be forcibly acquired. Or, a fraudulent action flag may be set to abort the procedure.

When the "Oral Test" button is clicked in the application execution menu screen (S354), the oral test execution screen shown in Fig. 43 appears (S356). In the oral test execution screen, question videos registered in the oral test setting table are retrieved under specified conditions and sequentially presented to an applicant. An applicant clicks the "Start Speaking" button for each question to start answering into the television camera and microphone on the applicant terminal. When the answer is complete, the applicant clicks the "End Speaking" button. If the applicant has failed to listen to a question, he/she clicks the "Question Check" button to reproduce the same question video in the oral test execution screen. The time period from the end of playback of question video to when the "Start Speaking" button is clicked is recorded as a response time and the time period from when the "Start Speaking" button is clicked to when the "End Speaking" button is clicked is recorded as an answer time. The number of times the "Question Check" button is clicked is recorded as a question check count. The recorded data items are respectively evaluated in the rating evaluation in the oral test. For the convenience of an applicant, the oral test execution screen displays the answer time for each question and the time elapsed after the end of question.

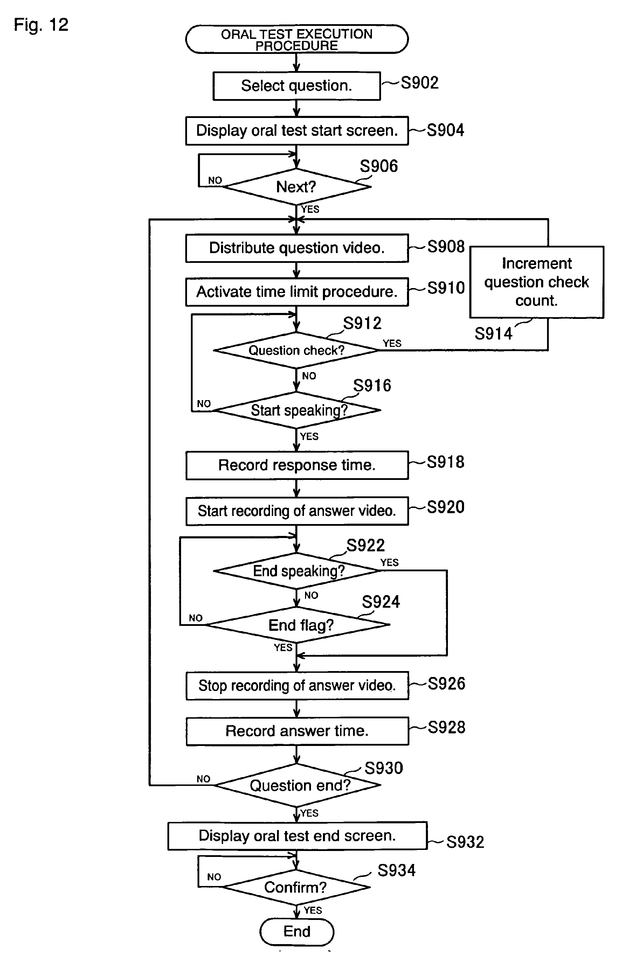

Fig. 12 shows an example of the oral text execution procedure. As shown in Fig. 12, a question video is selected from the oral test setting table (S902), and an oral test start screen (not shown) explaining the execution outline of the oral test appears (S904) . When the "Next" button is clicked in the oral test start screen (S906), a question video is distributed to an applicant terminal (S908) and the time limit procedure discussed earlier is activated (S910). When the "Question Check" button is clicked (S912), the question check count is incremented (S914). When the "Start Speaking" button is clicked (S916), the response time is recorded (S918) and recording of the answer video of the applicant starts (S920). Next, when the "End Speaking" button is clicked (S922) or an end flag is set by the time limit processing (S924), recording of answer video ends (S926) and the answer time is recorded (S928). These steps are repeated from S908 and when all questions have ended (S930), an oral test end screen appears (S932), and the oral test execution procedure ends (S358).

Similar to the reproducing of question video in the oral test setting discussed earlier, a question video in an applicant terminal may be reproduced by a videophone function of an applicant terminal by transmitting the question video to the applicant terminal from a videophone terminal emulated on an interview server 140 or may be reproduced in web browser by distributing the question video to the applicant terminal via a web server.

Similar to the recording of question video in the oral test setting discussed earlier, answer video from an applicant terminal may be received by a Videophone terminal emulated on an interview server 140 directly or via the two-way communication server for recording. By emulating a videophone terminal on an interview server and communicating with an applicant terminal, it is possible to provide an oral test function using a standard videophone program and a web browser, without installing a special communications program in the applicant terminal.

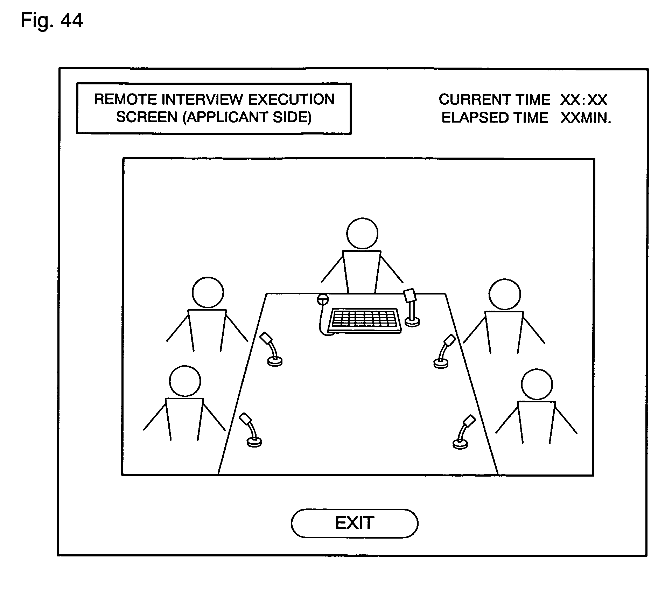

When the "Remote Interview" button is clicked in the application execution menu screen (S360), a waiting room screen (not shown) is displayed in which remote interviewees are queued (S362). When the recruiter clicks the "Send" button of the entrance notice in the remote interview execution screen (recruiter side), the waiting room screen is notified of the applicant's entrance in the interview room, causing the "Enter" button to appear. When the "Enter" button in the waiting room screen is clicked (S364), the remote interview execution screen (applicant side) shown in Fig. 44 appears (S366). The remote interview execution screen (applicant side) displays the television video of the recruiter terminal. This enables a remote interview over a videophone between the remote interview execution screen (recruiter side) on the recruiter terminal and the remote interview execution screen (applicant side) on the applicant terminal. The remote interview execution screen (applicant side) includes the "Exit" button. When the remote interview is over, clicking the "Exit" button releases the connection to the recruiter terminal, thus terminating the remote interview execution procedure (S368). For the convenience of an applicant, the remote interview execution screen (applicant side) displays the current time and the time elapsed since the start of the remote interview.

The interview service offered by the web server 110 mentioned above may be provided by activating the interview server 140 via the CGI of the web server 110.

While a single recruiter performs the rating in the writing ability test rating procedure or oral test rating procedure in the foregoing embodiment, a plurality of recruiters may individually perform the rating and the rating results are compiled.

While answer video is recorded by the applicant while using the Start Speaking button and End Speaking button in the oral test execution procedure according to the above-described embodiment, the level of voice transmitted from an applicant terminal may be monitored and recording may be started when a predetermined level is exceeded, and recording may be terminated when the monitored level is below the predetermined level for a predetermined time period. The applicant thus is not required click corresponding buttons. The applicant only needs to speak to his/her applicant terminal to cause the answer video to be automatically recorded.

While the answer video is recorded from the start of speaking by the applicant in the oral test execution procedure in the above-described embodiment, the answer video of the applicant may be recorded from the start of distribution of the question video. This enables evaluating the listening attitude of the applicant in the process of questioning.

While a recruiter performs the rating while conversing with an applicant online in the remote interview execution procedure in the above-described embodiment, the video of an applicant at the time of a remote interview may be recorded for later playback and rating.

While a single question is presented in one screen and the "Next" button or "Previous" button is used to answer multiple questions in the procedures for executing a knowledge test, writing ability test or a character diagnosis test in the above-described embodiment, a plurality of questions may be included in a single screen and the applicant may scroll through the screen to answer the questions.

While the above-described embodiments include preliminary selection tests including a personal identification function to collate the image of an applicant during a test with the registered image of the applicant which are remotely performed without using video, such as a knowledge test, a writing ability test and a character diagnosis test, and a preliminary selection test remotely performed using video, such as an oral test, the present invention is not limited thereto, and a configuration including either type of the preliminary tests provides the benefits of the present invention.

While the knowledge test, writing ability test and character diagnosis test are described as exemplary preliminary selection tests that do not use video images in the above-described embodiment, the present invention is not limited thereto, and may include any test method for checking the suitability of an applicant without using the video, and any combination of such methods to satisfy a specific need is permitted.

While the above-described embodiment includes a function to perform a remote interview between a recruiter and an applicant, and a preliminary selection test that is performed remotely without using video, wherein the test includes a personal identification function to collate the image of an applicant during a test with the registered image of the applicant, such as a knowledge test, a writing ability test or a character diagnosis test, as well as a preliminary selection test, such as an oral test, remotely performed using video are executed as preliminary selection of the remote interview, the present invention is not limited thereto, and may include these preliminary selection test functions alone and may be executed as a preliminary selection of a direct interview between a recruiter and an applicant.

While a videophone terminal is emulated on an interview server to perform television video communications between a recruiter terminal and an applicant terminal in the above-described embodiment, the present invention is not limited thereto. A dedicated communications program may be installed in the recruiter terminal or in the applicant terminal in order to directly perform television video communications with the interview server.

As mentioned above, the present invention reduces geographical and time constraints for an applicant and enables efficient selection of an appropriate person by a recruiter.

## Claims

1. A remote interview system that performs a remote interview by connecting one or more applicant terminals having a videophone function and one or more recruiter terminals having a videophone function via a communications line, the remote interview system comprising:
a recruitment accepting means for accepting recruitment from the recruiter terminal; an application accepting means for accepting an application from the applicant terminal in response to the accepted recruitment; a question presenting means for presenting a pre-registered question to the applicant terminal whose application has been accepted; an answer acquiring means for acquiring an answer input by an applicant in response to the presented question; and a rating means for rating the acquired answer to thereby provide the system with a function to execute a preliminary selection test on an applicant; wherein
the remote interview system further comprises: an applicant image registering means for registering an image of an applicant; an applicant image acquiring means for acquiring the image of an applicant during the preliminary selection test; and an image collating means for collating the acquired image with the registered image; thereby providing the system with a function to check that the applicant himself/herself is taking the preliminary selection test.

2. The remote interview system according to claim 1, wherein the image collating means includes a function to perform matching between the acquired image and the registered image and to record an acquired image if matching is not obtained, and the rating means includes a function to display in a contrasting manner the registered image and the recorded image.

3. The remote interview system according to claim 1 or 2, wherein the applicant image registering means and/or the applicant image acquiring means includes a communications function that is compliant with a videophone protocol and segments a still image from received television video.

4. The remote interview system according to any one of claims 1 through 3, wherein the remote interview system includes a function to check the knowledge level of an applicant as the preliminary selection test.

5. The remote interview system according to any one of claim 1 through 4, wherein the remote interview system includes a function to execute a character diagnosis test for diagnosing the character of an applicant as the preliminary selection test.

6. The remote interview system according to any one of claims 1 through 5, wherein the remote interview system includes a function to execute a writing ability test for checking the writing ability of an applicant as the preliminary selection test.

7. The remote interview system according to any one of claims 1 through 6, wherein the recruitment accepting means includes a question setting means for setting a question to be presented by the question presenting means.

8. The remote interview system according to claim 7, wherein the question setting means includes a function to specify a question as either an obligatory question or an elective question and a function to specify the number of questions to be presented and wherein the question presenting means includes a function to present the specified number of questions by using all of the questions specified as obligatory questions and questions randomly selected from those specified as elective questions.

9. The remote interview system according to claim 7, wherein the question setting means includes a function to specify the time required to answer each question and a function to specify the time limit of the preliminary selection test, and wherein the question presenting means includes a function to make a combination of questions that can be answered within the specified time limit.

10. The remote interview system according to any one of claims 7 through 9, wherein the question setting means includes a function to specify the field of each question, and wherein the question presenting means includes a function to present a combination of questions in a field corresponding to a specified course.

11. The remote interview system according to any one of claims 7 through 10, wherein the question setting means includes a function to specify the field of each question, and wherein the rating means includes a function to collate the acquired answer with a true answer and compile answers by the specified evaluation segment.

12. The remote interview system according to any one of claims 7 through 11, wherein the question setting means includes a function to specify the evaluation segment of each question and wherein the rating means includes a function to compile answers by the specified evaluation segment.

13. The remote interview system according to any one of claims 7 through 12, wherein the question setting means includes a function to specify the distribution of points of each question by evaluation segment, and wherein the rating means includes a function to present an acquired answer, a function to acquire the evaluation by evaluation segment of the presented answer and a function to compile the evaluation by evaluation segment from the acquired evaluation and the specified distribution of points.

14. The remote interview system according to claim 13, wherein the rating means sequentially retrieve and presents acquired answers and acquires evaluation, and includes a function to sequentially retrieves and present the answers to the questions from the same applicant and a function to sequentially retrieve and present the answers to the same question from applicants.

15. The remote interview system according to any one of claims 11 through 14, wherein the rating means includes a function to display the results of the compilation in a bar chart.

16. The remote interview system according to any one of claims 1 through 15, wherein the question presenting means includes a question video distributing means for distributing a registered question video to the applicant terminal whose application has been accepted, wherein the answer acquiring means includes an answer video recording means for receiving and recording an answer video transmitted from the applicant terminal in response to the distributed question video, and wherein the rating means includes an evaluating means for distributing the recorded answer video in response to a request by the recruiter terminal and acquiring the evaluation by the recruiter, thereby providing the system with a function to execute a preliminary oral selection test on an applicant.

17. A remote interview system that performs a remote interview by connecting one or more applicant terminals having a videophone function and one or more recruiter terminals having a videophone function via a communications line, the remote interview system comprising:
a recruitment accepting means for accepting recruitment from the recruiter terminal; an application accepting means for accepting an application from the applicant terminal in response to the accepted recruitment; a question video distributing means for distributing a registered question video to the applicant terminal whose application has been accepted; an answer video recording means for receiving and recording an answer video transmitted from the applicant terminal in response to the distributed question video; and a rating means for distributing the recorded answer video in response to a request by the recruiter terminal and acquiring the evaluation by the recruiter to thereby provide the system with a function to execute a preliminary oral selection test on an applicant.

18. The remote interview system according to claim 17, wherein the question video distributing means, the answer video recording means and the answer video distributing means each includes a communications function which comply with a video phone protocol.

19. The remote interview system according to claim 17 or 18, wherein the recruitment accepting means includes a question video setting means for setting a question video presented by the question presenting means.

20. The remote interview system according to any one of claims 17 through 19, wherein the question video setting means includes a function to specify the distribution of points of each question by evaluation segment, and wherein the rating means includes a function to present an acquired answer video, a function to acquire the evaluation by evaluation segment of the presented answer video and a function to compile the evaluation by evaluation segment from the acquired evaluation and the specified distribution of points.

21. The remote interview system according to claim 20, wherein the rating means sequentially retrieves and presents acquired answer video and acquires an evaluation, and the rating means includes a function to sequentially retrieve and present the answer video corresponding to the questions from the same applicant and a function to sequentially retrieve and present the answer video corresponding to the same question from applicants.

22. The remote interview system according to claim 20 or 21, wherein the rating means includes a function to display the results of the compilation in a bar chart.

23. The remote interview system according to any one of claim 17 through 22, wherein the answer video acquiring means includes a function to measure the response time until an applicant starts answering the distributed question and the answer time during which the applicant answers the question, and wherein the rating means includes a function to present the measured response time and answer time.

24. The remote interview system according to any one of claims 17 through 23, wherein the question video distributing means includes a function to re-distribute the distributed question video in response to a question check request from an applicant, and wherein the rating means includes a function to present the question check count of the applicant.

25. A remote interview system comprising: a recruitment accepting means for accepting recruitment from a recruiter terminal connected via a communications line; an application accepting means for accepting an application from an applicant terminal connected via a communications line in response to the accepted recruitment; a question video distributing means for distributing a registered question video to the applicant terminal whose application has been accepted, an answer video recording means for receiving and recording an answer video transmitted from the applicant terminal in response to the distributed question video, and a rating means for distributing the recorded answer video in response to a request by the recruiter terminal and acquiring the evaluation by the recruiter to thereby provide the system with a function to remotely execute a preliminary oral selection test on an applicant.

26. A remote interview method that performs a remote interview by connecting one or more applicant terminals having a videophone function and one or more recruiter terminals having a videophone function via a communications line, the remote interview method comprising: a step of accepting recruitment from the recruiter terminal; a step of accepting an application from the applicant terminal in response to the accepted recruitment; a step of presenting a pre-registered question to the applicant terminal whose application has been accepted; a step of acquiring an answer input by an applicant in response to the presented question; and a step of rating the acquired answer such that the method can execute a preliminary selection test on an applicant; wherein the remote interview method further comprises: a step of registering an image of an applicant; a step of acquiring the image of an applicant during the preliminary selection test; and a step of collating the acquired image with the registered image to thereby enable the method to check that the applicant himself/herself is taking the preliminary selection test.

27. The remote interview method according to claim 26, wherein the question presenting step includes a step of distributing a registered question video to the applicant terminal whose application has been accepted, wherein the answer acquiring step includes a step of receiving and recording an answer video transmitted from the applicant terminal in response to the distributed question video, wherein the rating step includes a step of distributing the recorded answer video in response to a request by the recruiter terminal and acquiring the evaluation by the recruiter, thereby the method can execute a preliminary oral selection test on an applicant.

28. A remote interview method that performs a remote interview by connecting one or more applicant terminals having a videophone function and one or more recruiter terminals having a videophone function via a communications line, the remote interview method comprising:
a step of accepting recruitment from the recruiter terminal; a step of accepting an application from the applicant terminal in response to the accepted recruitment; a step of distributing a registered question video to the applicant terminal whose application has been accepted; a step of receiving and recording an answer video transmitted from the applicant terminal in response to the distributed question video; and a step of distributing the recorded answer video in response to a request by the recruiter terminal and acquiring the evaluation by the recruiter to thereby enable the method to execute a preliminary oral selection test on an applicant.

29. A remote interview method comprising: a step of accepting recruitment from a recruiter terminal connected via a communications line; a step of accepting an application from an applicant terminal connected via a communications line in response to the accepted recruitment; a step of distributing a registered question video to the applicant terminal whose application has been accepted; a step of receiving and recording an answer video transmitted from the applicant terminal in response to the distributed question video; and a step of distributing the recorded answer video in response to a request by the recruiter terminal and acquiring the evaluation by the recruiter to thereby enable the method to remotely execute a preliminary oral selection test on an applicant.

30. A remote interview program for causing a computer to execute the remote interview method according to any one of claims 26 through 29.
